# EUROPEAN PATENT APPLICATION

(11) **EP 4 729 822 A1**
(43) Date of publication of application: **22.04.2026**
(21) Application number: 24923154.9
(22) Date of filing: 14.05.2024
(51) Int. Cl.: F16M 11/26

(54) **LIFTING APPARATUS, CAMERA MODULE, AND ELECTRONIC DEVICE**

(30) Priority: 07.02.2024 CN 202410175694
(71) Applicant: Huawei Technologies Co., Ltd., Shenzhen, Guangdong 518129 (CN)
(72) Inventor: GUO, Qiancheng, Shenzhen, Guangdong 518129 (CN); LIN, Hongfan, Shenzhen, Guangdong 518129 (CN); SHEN, Baojun, Shenzhen, Guangdong 518129 (CN)
(74) Representative: Maiwald GmbH
(86) International application number: PCT/CN2024/093027
(87) International publication number: WO 2025/166930

(57) **Abstract**

An elevating apparatus, a camera module, and an electronic device are provided. A rotating member of the elevating apparatus cooperates with an elevating member via a linkage member, and the rotating member rotates to drive, via the linkage member, the elevating member to move up and down in a thickness direction. There is an elastic member between the linkage member and the rotating member or the elevating member. The linkage member is sleeved on at least two guide members, the elastic member is also located on the guide member, and the guide member guides movement of the elastic member and the linkage member, so that the linkage member slides only in the thickness direction. The linkage member, the guide members, and the elastic member are assembled in an accommodation space enclosed by a main body portion and a mounting portion that are integrally formed.

## Description

### TECHNICAL FIELD

This application relates to the field of electronic technologies, and in particular, to an elevating apparatus, a camera module, and an electronic device.

### BACKGROUND

A mobile phone, a tablet, a notebook computer, a wearable device, and the like each have a camera module, to implement a photographing function. The photographing function has gradually become an important feature of such type of products and one of main indicators for evaluating performance of such type of devices. With continuous development of electronic devices, thinness and lightness of the electronic devices have also become one of main development trends.

To meet the pursuit of the photographing function and thinness, lightness and aesthetics of the device, the camera module may be designed as an elevating structure. When the camera module is used for photographing, at least a part of the camera module may be driven to extend outside a housing of the electronic device, to increase an optical available space inside the camera module, and implement a high-quality photographing function. When the camera module does not need to be used, at least the part of the camera module may be driven to retract from the outside of the housing to the inside, to decrease a thickness of the camera module, and facilitate thinness and aesthetics of the electronic device.

However, in scenarios such as pressing and falling, smoothness of a buffering design of the elevating-type camera module is poor, and problems such as buffering stuttering and buffering failure are prone to occur, resulting in damage to the camera module and the electronic device.

### SUMMARY

Embodiments of this application provide an elevating apparatus, a camera module, and an electronic device. The elevating apparatus can implement highly reliable buffering, ensure smoothness of buffering, resolve problems such as buffering stuttering and buffering failure, and more reliably resist impact external forces in scenarios such as falling and pressing.

According to a first aspect of embodiments of this application, an elevating apparatus is provided, and includes an elevating member, a rotating member, and a linkage member, and the rotating member is rotatably disposed. One of the rotating member and the elevating member has a main body portion and a mounting portion that are integrally formed, the main body portion and the mounting portion enclose an accommodation space, the linkage member is at least partially disposed in the accommodation space, the linkage member cooperates with the other of the rotating member and the elevating member, and the rotating member is configured to drive, in a rotation process via the linkage member, the elevating member to move toward or away from the rotating member in a thickness direction, to implement extension and retraction of the elevating apparatus. Therefore, the elevating apparatus has a retracted state and an extended state. When the elevating apparatus is in the retracted state, a thickness of the elevating apparatus is small, which facilitates thinning. When the elevating apparatus is in the extended state, an internal space of the elevating apparatus is large, and an optical available space of a camera apparatus located inside is large, which obtains excellent photographing quality.

The elevating apparatus further includes an elastic member and at least two guide members, the elastic member and the at least two guide members are all located in the accommodation space, and the elastic member is located between the linkage member and the main body portion. In the buffering scenarios such as falling and pressing, when an external force is transmitted to the elevating member, the elastic member, and the rotating member, elastic extension and compression of the elastic member can be good for buffering, thereby reducing or avoiding damage to the elevating member, the rotating member, and the like.

The linkage member is located on the at least two guide members, and the at least two guide members are configured to enable the linkage member to slide in the thickness direction. The guide members limit a movement direction of the linkage member, ensure that in the buffering scenarios such as falling and pressing, the linkage member slides only in the thickness direction, and does not tilt forward and backward (in a rotation radial direction of the rotating member), tilt leftward or rightward (in a rotation tangential direction of the rotating member), or rotate around a conductive member, improve smoothness of buffering under impact, and avoid problems such as buffering stuttering and buffering failure caused by scratching between the linkage member and the rotating member.

The elastic member is located on at least one of the at least two guide members. The guide member on which the elastic member is disposed also guides the elastic member, so that the elastic member elastically extended and compressed in the thickness direction. This helps ensure smooth movement of the linkage member in the thickness direction during elastic buffering, and also helps improve smoothness of buffering under impact.

In addition, the mounting portion and the main body portion are of an integrated structure, and have high bonding strength. The linkage member is disposed in the accommodation space enclosed by the mounting portion and the main body portion, to significantly improve assembly strength of the elastic member and the linkage member on the rotating member. This reduces or avoids damage to the mounting portion (a top wall of the mounting portion) under rebound effect of the elastic member, further avoids a buffering implementation problem, and improves reliability of resisting the impact force in the buffering scenarios such as falling and pressing.

A first through hole is disposed on at least one of the mounting portion and the main body portion. The guide member can pass through the through hole and be fastened in the through hole, so that the guide member can be fastened in the accommodation space enclosed by the mounting portion and the main body portion. Therefore, assembly and fastening of the guide member is implemented, and assembly of the linkage member and the elastic member can also be implemented. An assembly operation is simple, and mounting is easy to implement. In addition, no additional assembly member needs to be disposed for implementation. This reduces a component structure, reduces costs, does not occupy a space in the thickness direction, and facilitates a thinning design of the elevating apparatus.

In a possible implementation, the at least two guide members include a first guide member and a second guide member; the linkage member includes a matching portion and a first extension portion that are connected, and the linkage member cooperates with the other of the rotating member and the elevating member via the matching portion.

The matching portion is disposed around the first guide member, the first extension portion is disposed around the second guide member, and a thickness of the matching portion is greater than a thickness of the first extension portion. In other words, in the thickness direction, a distance between the matching portion and the first guide member that are for guiding and cooperation is greater than a distance between the first extension portion and the second guide member that are for guiding and cooperation, and guiding effect between the first guide member and the matching portion is better than guiding effect between the first extension portion and the second guide member. The first guide member can implement precise positioning of the matching portion (namely, the linkage member), and the second guide member can implement coarse positioning of the first extension portion (namely, the linkage member). Combination of the precise positioning and the coarse positioning is used to ensure smooth guiding in the buffering scenarios, and be conducive to reducing a mounting precision requirement and mounting difficulty, improve assemblability, and facilitate assembly implementation.

In a possible implementation, the elastic member is disposed around the second guide member, and the elastic member is located between the first extension portion and the main body portion. No elastic member is disposed on the first guide member on which the matching portion is disposed, because a thickness of the matching portion is large. The elastic member is located at the second guide member when an overall height requirement of the rotating member is small, to help ensure that the elastic member has a long extension and compression path. This implements more effective buffering effect, ensures buffering effect, and helps reduce a thickness of the rotating member and the thickness of the entire elevating apparatus.

In a possible implementation, the at least two guide members further include a third guide member, and the third guide member and the second guide member are respectively located on two sides of the first guide member in a rotation direction of the rotating member.

The linkage member further includes a second extension portion, the second extension portion is disposed around the third guide member, the elastic member is further disposed around the third guide member, and the elastic member is located between the second extension portion and the main body portion. In other words, one mounting portion may include three guide members and two elastic members, to achieve better buffering effect, and provide a stable guiding function in a buffering process, thereby improving smoothness of buffering.

In a possible implementation, a thickness of the second extension portion is less than the thickness of the matching portion.

In a possible implementation, a ratio of the thickness of the matching portion to the thickness of the first extension portion is 3.5 to 5, and a ratio of the thickness of the matching portion to the thickness of the second extension portion is 3.5 to 5. A structure of the linkage member is appropriately designed, so that the linkage member and the guide member are better guided and cooperated in a precise positioning manner combining with a coarse positioning manner, smoothness of buffering is high, and mass production assembly is high.

In a possible implementation, a spacing between an inner surface of the matching portion and an outer surface of the first guide member ranges from 5 µm to 10 µm. This further improves guiding precision of the first guide member for the matching portion (the linkage member), ensures precise positioning guiding of the first guide member for the linkage member, and better improves smoothness of buffering.

In a possible implementation, a spacing between an inner surface of the first extension portion and an outer surface of the second guide member ranges from 20 µm to 30 µm; and a spacing between an inner surface of the second extension portion and an outer surface of the third guide member ranges from 20 µm to 30 µm. This implements coarse positioning guiding of the second guide member and the third guide member for the linkage member, ensures high smoothness of buffering, and better facilitates assembly implementation.

In a possible implementation, the mounting portion includes a top wall, and the top wall is opposite to the main body portion; and the top wall and the main body portion each have the first through hole, and two ends of the guide member are separately fastened in the first through hole, to improve flexibility of assembling the guide member.

In a possible implementation, a surface that is of the top wall and that faces away from the main body portion has a first groove, and the first through hole is located on a bottom wall of the first groove; and the elevating apparatus further includes a first connection member, and the guide member is fastened in the first through hole via the first connection member.

The first connection member is located in the first groove, which can facilitate positioning during assembly. In addition, the recessed first groove can spare a space in the thickness direction, so that the first connection member is fastened in the first groove, and the first connection member can occupy fewer spaces or no space in the thickness direction.

In a possible implementation, the main body portion includes a top surface and an outer side surface, the top surface is opposite to the top wall of the mounting portion, and the outer side surface may be located on an outer side of the top surface.

The top surface has a first positioning slot, the outer side surface has an opening, and the opening communicates with the first positioning slot. During assembly, the elastic member may be inserted and disposed in the first positioning slot via the opening, to implement precise positioning of the elastic member during assembly, and also facilitate sleeve cooperation with the elastic member when the guide member is mounted.

In a possible implementation, the top surface has a second positioning slot, and the first guide member is located in the second positioning slot. The second positioning slot can assist positioning in precise assembly of the first guide member and the linkage member. For example, when the linkage member is assembled in the accommodation space, the second positioning slot may correspond to the matching portion, to improve precise positioning of the linkage member, and also facilitate sleeve cooperation with the matching portion when the first guide member is mounted.

In a possible implementation, a protruding first slide block is disposed on the matching portion, and the other of the rotating member and the elevating member has a first slide rail; and the first slide rail is at least partially disposed in an inclined manner relative to the thickness direction, and the first slide block is inserted into the first slide rail and slides along the first slide rail.

In a possible implementation, the elevating apparatus further includes a flexible conductive member, where the flexible conductive member includes a first connection end, an elastic extension and compression section, and a second connection end that are sequentially connected, the first connection end is electrically connected to the elevating member, and the second connection end is electrically connected to a base.

The elastic extension and compression section includes a bent section and a plurality of cantilever sections, the plurality of cantilever sections are spaced apart, the cantilever sections and the bent section are alternately distributed in sequence, and two adjacent cantilever sections are connected via one bent section. In this way, the formed elastic extension and compression section is similar to a spring structure, and has an adjustable extension and compression margin. Under an external force, the elastic extension and compression section can be extended or compressed, thereby avoiding impact of disposing the flexible conductive member on moving up and down of the elevating member.

In a possible implementation, the elevating apparatus further includes a drive mechanism and a transmission mechanism, the transmission mechanism separately cooperates with the drive mechanism and the rotating member, and the drive mechanism drives, via the transmission mechanism, the rotating member to rotate.

In a possible implementation, the elevating apparatus further includes the base, the rotating member is rotatably disposed in the base, the elevating apparatus further includes a cover plate, the cover plate covers the base, and the cover plate has an avoidance hole for the elevating member to pass through.

An accommodating cavity is enclosed between the cover plate and the base, at least the transmission mechanism is disposed in the accommodating cavity, and the transmission mechanism is separately connected to the cover plate and the base.

In a possible implementation, the cover plate includes a first cover body and a second cover body, a second through hole is disposed on the first cover body, and the second cover body is assembled on the second through hole. In other words, the first cover body and the second cover body are two independent structural members assembled together.

The first cover body is fastened to the base, and the second cover body is fastened to the transmission mechanism. This decouples an alignment tolerance of assembly of the cover plate and the base and an alignment tolerance of assembly of the cover plate and the transmission mechanism. An assembly spacing between the first cover body and the second cover body, and the like can absorb a tolerance caused by alignment of assembly of the first cover body and the base, ensure precise alignment of assembly of the second cover body and the transmission mechanism, and avoid a problem that a rotating shaft is skewed in an assembly process due to excessive positioning holes and over-positioning, thereby ensuring transmission effect.

In a possible implementation, the second cover body includes a fastening portion and a protrusion portion, the protrusion portion is protruded from and disposed on one surface of the fastening portion, and the fastening portion is fastened to the transmission mechanism. The protrusion portion is inserted and fastened in the second through hole, and the fastening portion abuts against and is fastened to a surface that is of the first cover body and that faces the base. Insertion of the protrusion portion into the second through hole and abutting of the fastening portion against the first cover body both have assembly positioning functions, which facilitates assembly. In addition, the first cover body and the second cover body have a larger contact area, and have higher reliability.

In a possible implementation, the rotating member further includes a transmission portion, the transmission portion is fastened to the main body portion, the transmission mechanism cooperates with the transmission portion, and the transmission mechanism drives, via the transmission portion, the rotating member to rotate. The base has a limiting slot, and the transmission portion is located in the limiting slot. The limiting slot performs limiting, to ensure reliable rotation of the rotating member in the base. In addition, a rotation arc of the rotating member can be limited through a design of the limiting slot, to adjust an elevating height of the elevating member, thereby meeting different requirements.

The limiting slot has cushions at two ends in the rotation direction of the rotating member, and the cushion at least partially protrudes in the limiting slot. When the transmission portion rotates to the two ends of the limiting slot, the transmission portion may be in contact with the cushions. The cushion can perform buffering, to reduce or avoid a problem of an abnormal sound caused by direct impact between the transmission portion and the end portion (the base) of the limiting slot, thereby improving use experience.

In a possible implementation, a plurality of weight reduction slots are disposed on the transmission portion, to reduce a weight of the transmission portion and a weight of the entire rotating member, reduce a moment of inertia, and further reduce or avoid a problem of damage to the transmission portion caused by impact between the transmission portion and the base due to the moment of inertia. In addition, this can reduce a rotational impact force caused by the weight of the transmission portion on a gear component (the transmission mechanism) in processes such as falling, and protect the transmission mechanism.

In a possible implementation, the transmission portion has a second slide block, the base has an arc-shaped second slide rail, the second slide rail is located in the limiting slot, and the second slide block slides along the second slide rail. Cooperation of the second slide rail with the second slide block is further used to limit rotation of the rotating member, and ensure rotation stability of the rotating member.

A surface that is of the base and that faces the rotating member has a second groove, and the second groove is configured to accommodate a lubrication structure. The lubrication structure may perform lubrication. For example, the lubrication structure helps improve smoothness of rotation of the rotating member and alleviates problems of shaking and an abnormal sound between the rotating member and the base.

In a possible implementation, a surface that is of the cover plate and that faces the base has a protruding limiting member, and at least the main body portion of the rotating member is located between the limiting member and the base.

A surface that is of the main body portion and that faces the cover plate has a third groove, and the third groove is configured to accommodate a lubrication structure.

In a possible implementation, the drive mechanism has a drive portion and an output shaft, the output shaft cooperates with the transmission mechanism, the drive portion is configured to enable the output shaft to rotate, the output shaft rotates to drive, via the transmission mechanism, the rotating member to rotate, and at least a part of the output shaft is located in the accommodating cavity.

The base has a protruding stopper, the stopper is located in the accommodating cavity, and the stopper is located on a side that is of the output shaft and that faces away from the drive portion along a rotation axis. The stopper can limit the output shaft, to limit movement of the output shaft along the axis, and alleviate problems such as the abnormal sound and noise of the drive mechanism.

In a possible implementation, a distance between a surface that is of the stopper and that faces the output shaft and an end face of one end that is of the output shaft and that faces away from the drive portion along the rotation axis is 0.1 mm to 0.2 mm, to limit displacement of the output shaft under a condition that the stopper does not affect rotation of the output shaft, so that the displacement generated by the output shaft does not impact the structure in the drive portion as much as possible, thereby avoiding generating problems such as the abnormal sound.

In a possible implementation, the base includes a bottom wall and a side wall, the side wall is enclosed around the bottom wall, and the cover plate is fastened to the side wall. The side wall has a third slide rail, the elevating member has a third slide block, the third slide rail extends in the thickness direction, and the third slide block slides along the third slide rail. A guiding function of the third slide rail can ensure that the elevating member moves up and down in the thickness direction under driving of the rotating member.

In a possible implementation, there are a plurality of third slide blocks, and the plurality of third slide blocks are evenly distributed in a circumferential direction of the elevating member. The plurality of evenly distributed third slide blocks can provide even support for the elevating member, and can alleviate problems such as pressing depression and pressing shaking.

In a possible implementation, a waterproof and breathable member is also disposed on the base, and the inside of the base is in communication with the outside of the base via the waterproof and breathable member. The waterproof and breathable member can allow gas to pass through but cannot allow liquid to pass through, thereby meeting a breathability requirement of the camera module and ensuring waterproof performance of the camera module.

In a possible implementation, the elevating apparatus further includes a top protection cover, where the top protection cover covers an end that is of the elevating member and that faces away from the rotating member. The top protection cover protects structural components such as the elevating member and the camera apparatus that are located on a side that is of the top protection cover and that faces the base.

In a possible implementation, an end portion of the end that is of the elevating member and that faces away from the rotating member is sleeved in the top protection cover, and there is a bonding layer between an outer wall of the end portion of the end that is of the elevating member and that faces away from the rotating member and an inner wall of the top protection cover, so that the elevating member is fastened to the top protection cover via the bonding layer.

A fourth groove is disposed on the outer wall of the end portion of the end that is of the elevating member and that faces away from the rotating member, a fifth groove is disposed on the inner wall of the top protection cover, and the bonding layer is filled in the fourth groove and the fifth groove. On one hand, the fourth groove and the fifth groove increase bonding areas between the bonding layer and the elevating member and between the bonding layer and the top protection cover, thereby improving bonding strength. On the other hand, the bonding layer located in the fourth groove and the fifth groove forms an undercut structure, to further enhance bonding performance and prevent the top protection cover from falling off in the scenarios such as falling.

A second aspect of embodiments of this application provides a camera module, including a camera apparatus and the elevating apparatus according to any one of the foregoing implementations. The camera apparatus is disposed in the elevating apparatus, and at least a part of the camera apparatus is movably disposed in a thickness direction.

A third aspect of embodiments of this application provides an electronic device, including a housing and the camera module according to the foregoing implementations. The camera module at least partially is located in the housing.

### BRIEF DESCRIPTION OF DRAWINGS

FIG. 1 is a diagram of a structure of an electronic device in a perspective according to an embodiment of this application;
FIG. 2 is a diagram of the structure of the electronic device in FIG. 1 in another perspective;
FIG. 3 is a diagram of a split structure of the electronic device in FIG. 1;
FIG. 4 is a diagram of a structure of an elevating apparatus in a retracted state in a camera module according to this application;
FIG. 5 is a diagram of a split structure of the elevating apparatus in FIG. 4;
FIG. 6 is a diagram of a sectional structure of the elevating apparatus in FIG. 4;
FIG. 7 is a diagram of a sectional structure of the elevating apparatus in FIG. 4 when the elevating apparatus is in an extended state;
FIG. 8 is a diagram of a front view of a structure of a rotating member cooperating with an elevating member when the elevating apparatus in FIG. 6 is in the retracted state;
FIG. 9 is a front view of another sectional structure of the elevating apparatus in FIG. 6 in the retracted state;
FIG. 10 is a diagram of a front view of a structure of the rotating member cooperating with the elevating member when the elevating apparatus in FIG. 7 is in the extended state;
FIG. 11 is a front view of another sectional structure of the elevating apparatus in FIG. 7 in the extended state;
FIG. 12 is a diagram of assembly of the rotating member, the elevating member, and a linkage member in the elevating apparatus in FIG. 6;
FIG. 13 is a diagram of a split structure of the rotating member and the elevating member in FIG. 10;
FIG. 14 is a diagram of a split of a partial structure of the rotating member in FIG. 13;
FIG. 15 is a diagram of a structure of the rotating member in FIG. 14;
FIG. 15a is a diagram of a front view of a structure of assembly of the linkage member and guide members in FIG. 15;
FIG. 16 is a diagram of a structure of assembly of a base and the rotating member in the elevating apparatus in FIG. 4;
FIG. 16a is an enlarged diagram of a partial structure of assembly of the base and the rotating member in FIG. 16;
FIG. 16b is a diagram of a structure of the rotating member in FIG. 16;
FIG. 17 is a diagram of a sectional structure of assembly of the base, the rotating member, and a cover plate in the elevating apparatus in FIG. 4;
FIG. 18 is a diagram of a front view of a structure of assembly of the base and a drive mechanism in FIG. 17;
FIG. 19 is a diagram of a structure of the elevating member in FIG. 17;
FIG. 20 is a diagram of a structure of another assembly of a base, a rotating member, and an elevating member in an elevating apparatus according to an embodiment of this application;
FIG. 21 is a diagram of a partial enlarged structure of a flexible conductive member in FIG. 20;
FIG. 22 is a diagram of a partial split structure of the elevating apparatus in FIG. 4;
FIG. 23 is a diagram of partial enlargement of a part A in FIG. 7;
FIG. 24 is a diagram of a structure of a top protection cover in FIG. 22;
FIG. 25 is a diagram of a structure of another elevating apparatus according to an embodiment of this application;
FIG. 26 is a diagram of a sectional structure at a second cover body of the elevating apparatus in FIG. 25; and
FIG. 27 is a diagram of a split structure of a cover plate in the elevating apparatus in FIG. 25.

Descriptions of reference numerals:
100: electronic device;
   101: housing component;
      102: middle frame; 1021: middle plate; 1022: side frame; 103: rear cover;
   104: display;
   105: main circuit board;
   106: battery;
   107: camera module;
      10: elevating apparatus;
      11: base; 11a: accommodation cavity;
         111: bottom wall; 1111: limiting slot; 1112: cushion; 1113: second groove; 1114: second slide rail; 1115: stopper;
         112: side wall; 1121: third slide rail;
         113: waterproof and breathable member; 114: second positioning hole;
      12: cover plate; 12a: accommodating cavity; 121: limiting member;
         122: first cover body; 1221: second through hole;
         123: second cover body; 1231: fastening portion; 1232: protrusion portion; 124: first positioning hole; 125: second mounting platform;
      13: rotating member;
         131: main body portion; 1311: outer side surface; 1312: top surface; 1313: first positioning slot; 1314: opening; 1315: second positioning slot; 1317: third groove;
         132: mounting portion; 1321: top wall; 1322: extension wall; 1323: first groove; 133: accommodation space; 134: first through hole;
         135: transmission portion; 1351: second tooth structure; 1352: weight reduction slot; 1353: second slide block;
      14: elevating member;
         141: first slide rail; 1411: first end portion; 1412: inclined section; 1413: second end portion;
         142: third slide block; 143: fourth groove; 144: first mounting platform;
      15: top protection cover;
         151: light transmission portion; 152: surrounding portion; 153: fifth groove;
      16: side protection sleeve;
      17: linkage member; 171: first slide block;
         172: matching portion; 172a: first coordination hole;
         173: first extension portion; 173a: second coordination hole;
         174: second extension portion; 174a: third coordination hole;
      18: elastic member;
      19: guide member;
         191: first guide member; 192: second guide member; 193: third guide member;
      110: flexible conductive member;
         1101: first connection end; 1102: elastic extension and compression section; 1102a: cantilever section; 1102b: bent section; 1103: second connection end;
      120: drive mechanism;
         1201: drive portion; 1202: output shaft; 1203: first tooth structure;
      130: transmission mechanism;
         1301: gear; 1302: rotating shaft;
      140: bonding layer;
      150: flexible circuit board; and
      160: conductive member.

**DESCRIPTION OF EMBODIMENTS**

Terms used in embodiments of this application are only used to explain specific embodiments of this application, but are not intended to limit this application.

Embodiments of this application provide an electronic device. The electronic device may include but is not limited to electronic devices such as a mobile phone, a tablet computer (tablet personal computer), a notebook computer, a camera, an ultra-mobile personal computer (ultra-mobile personal computer, UMPC for short), a handheld computer, a walkie-talkie, a netbook, a POS terminal, a personal digital assistant (personal digital assistant, PDA for short), a wearable device, a virtual reality (virtual reality, VR for short) device (for example, VR glasses, and a VR helmet), an augmented reality (augmented reality, AR for short) device (for example AR glasses and an AR helmet), a vehicle-mounted device, and a surveillance camera device that can implement a photographing function.

In embodiments of this application, an example in which the electronic device is a mobile phone is used. The mobile phone may be a bar-type phone, or the mobile phone may be a foldable phone. Specifically, the following uses an example in which the electronic device is a bar-type phone for description.

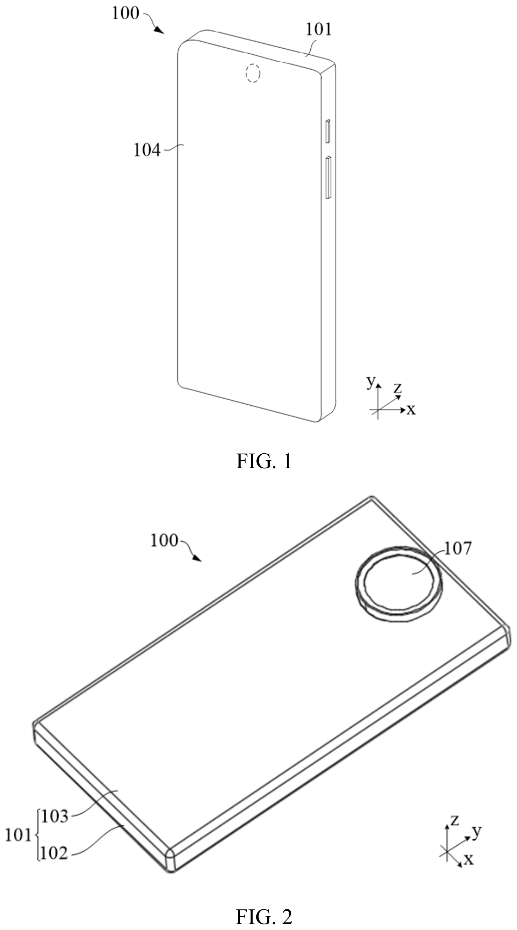

FIG. 1 is a diagram of a structure of an electronic device in a perspective according to an embodiment of this application.

Refer to FIG. 1, the electronic device 100 includes a housing component 101 and a display 104. The display 104 may be disposed on one side of the housing component 101. The display 104 and the housing component may enclose an accommodating space, and the accommodating space may be used to assemble and accommodate various structural members of the electronic device 100.

The display 104 is configured to display information and provide an interactive interface for a user. A surface that is of the display 104 and that faces away from the housing component 101 may be used as a display surface of the electronic device 100.

The display 104 may include but is not limited to an organic light-emitting diode (organic light-emitting diode, OLED for short) display, an active-matrix organic light-emitting diode (active-matrix organic light-emitting diode, AMOLED for short) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diodes (quantum dot light-emitting diodes, QLED for short) display, or the like.

FIG. 2 is a diagram of the structure of the electronic device in FIG. 1 in another perspective.

Refer to FIG. 2. The housing component 101 may include a middle frame 102 and a rear cover 103. The middle frame 102 may be enclosed around one side of the rear cover 103. For example, the middle frame 102 may be a ring-shaped frame structural member, and the rear cover 103 may be a plate-shaped structural member in a rectangular shape. Certainly, in some other examples, the rear cover 103 may also be of a plate-shaped structure in a square shape, a circular shape, an oval shape, a rounded rectangular shape, or the like.

In embodiments of this application, for ease of description, as shown in FIG. 1 and FIG. 2, a width direction of the electronic device 100 is an x direction, a length direction of the electronic device 100 is a y direction, and a thickness direction of the electronic device 100 is a z direction. It may be understood that a length, a width, and a thickness in embodiments of this application are merely for ease of description, and do not mean any limitation on a size. For example, the length may be greater than, equal to, or less than the width.

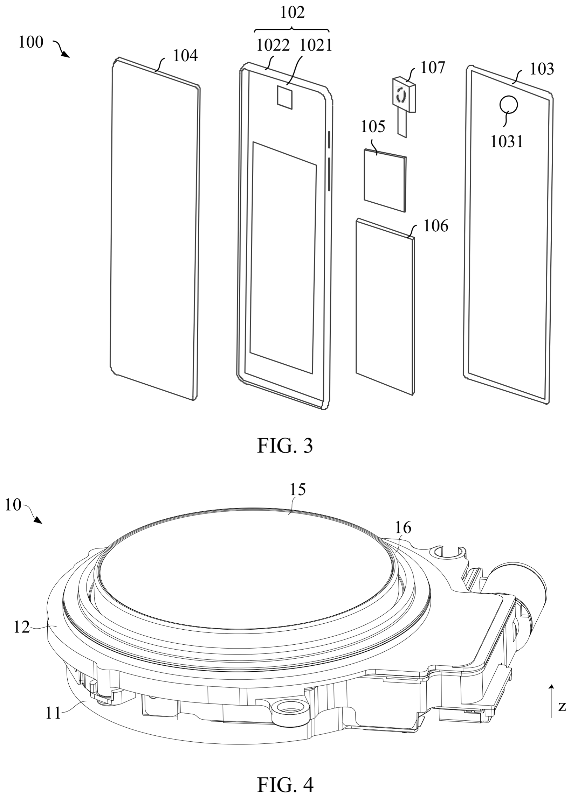

FIG. 3 is a diagram of a split structure of the electronic device in FIG. 1.

With reference to FIG. 3, the display 104 and the rear cover 103 may be respectively fastened to two opposite sides of the middle frame 102. For example, the display 104 and the rear cover 103 may be respectively located on two sides of the middle frame 102 in the thickness direction (the z direction). The display 104 and the rear cover 103 are separately fastened to the middle frame 102, to enclose a closed accommodating space. The rear cover 103 may be used as an appearance cover on a rear surface of the electronic device 100.

The rear cover 103 may be a rear metal cover, a rear glass cover, a rear plastic cover, or a rear ceramic cover. A material of the rear cover 103 is not limited in embodiments of this application.

The electronic device 100 may further include a main circuit board 105 and a battery 106. The main circuit board 105 and the battery 106 are located in the foregoing accommodating space. For example, the main circuit board 105 and the battery 106 may be disposed on the middle frame 102. For example, the main circuit board 105 and the battery 106 are disposed on a surface that is of the middle frame 102 and that faces the rear cover 103, or the main circuit board 105 and the battery 106 may be disposed on a surface that is of the middle frame 102 and that faces the display 104. When the main circuit board 105 is disposed on the middle frame 102, an opening may be disposed on the middle frame 102, so that an element on the main circuit board 105 is disposed at the opening of the middle frame 102.

The main circuit board 105 may include a processor, a controller, a memory, and the like. The processor may include one or more interfaces. The interface may be configured to connect to a charger to charge the electronic device 100, and the interface may also be configured to implement data transmission between the electronic device 100 and an external device. For example, the interface may also be configured to connect to a headset, a projection apparatus, or the like.

The electronic device 100 may further include a charging management module and a power management module (not shown in the figure). The charging management module and the power management module may also be fastened in the accommodating space.

The charging management module is configured to receive a charging input from the charger. The charger may be a wireless charger or a wired charger. In some wired charging examples, the charging management module may receive a charging input of a wired charger through the interface. In some wireless charging embodiments, the charging management module may receive a wireless charging input through a wireless charging coil of the electronic device 100. The charging management module can charge the battery 106, and can further supply power to the electronic device 100 via the power management module.

The power management module is configured to connect the battery 106, the charging management module, the processor, and the like. The power management module receives an input from the battery 106 and/or the charging management module, and supplies power to the processor, the memory, the display 104, a camera module 107, and the like. The power management module may be further configured to monitor parameters such as a capacity of the battery 106, a cycle count of the battery 106, and a health status (electric leakage or impedance) of the battery 106.

In some examples, the power management module may be disposed in the processor of the main circuit board 105. In some other examples, the power management module and the charging management module may alternatively be disposed in a same component.

Still refer to FIG. 3. The middle frame 102 may include a middle plate 1021 and a side frame 1022. The side frame 1022 may be enclosed around an outer periphery of the middle plate 1021, and the side frame 1022 may be in a ring-shaped structure.

A material of the middle plate 1021 may be aluminum, aluminum alloy, or magnesium alloy. The material of the middle plate 1021 is not limited. The side frame 1022 may be a metal side frame, or a ceramic side frame. A material of the side frame 1022 is not limited.

It should be noted that the middle plate 1021 and the side frame 1022 may be separately formed, and the middle plate 1021 and the side frame 1022 may be fastened and assembled together in a manner like welding, clamping, or bonding. Alternatively, the middle plate 1021 and the side frame 1022 may be integrally formed.

Alternatively, in some other examples, the middle frame 102 may not include the middle plate 1021, and the middle frame 102 may be in a ring-shaped structure. For example, the middle frame 102 and the rear cover 103 may be separately formed, and the middle frame 102 and the rear cover 103 may be fastened and assembled together in a manner like welding, clamping, or bonding. Alternatively, the middle frame 102 and the rear cover 103 may be integrally formed.

As shown in FIG. 2 and FIG. 3, the electronic device 100 may further include the camera module 107. The camera module 107 is configured to implement a photographing function, and the like. The camera module 107 may also be disposed in the accommodating space.

There may be one camera module 107 or a plurality of camera modules 107, to meet different photographing requirements.

For example, the camera module 107 may be a rear-facing camera, for example, a light inlet of the camera module 107 may face an appearance surface (a surface facing away from the display 104) of the rear cover 103. Alternatively, the camera module 107 may be a front-facing camera, for example, a light inlet of the camera module 107 may face a display surface (a surface facing away from the rear cover 103) of the display 104.

Refer to FIG. 3. For example, the camera module 107 is a rear-facing camera. The camera module 107 may be disposed on a surface that is of the middle plate 1021 and that faces the rear cover 103, and the rear cover 103 has an opening 1031. The camera module 107 may be totally located in the accommodating space, and light may enter the camera module 107 through the opening 1031 of the rear cover 103, to meet a photographing requirement on the camera module 107. Alternatively, the camera module 107 may be partially located in the accommodating space, and a part of the camera module 107 protrudes through the opening 1031 on a surface that is of the rear cover 103 and that faces away from the display 104, to help implement a thinness design of the electronic device 100.

The structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. For example, the electronic device 100 may further include components such as a communication module, a sensor, a microphone, a speaker, and a flash.

As a camera module on an electronic device develops, an optical function of the camera module becomes powerful, and a volume of the camera module becomes larger. To meet thinness of the electronic device, the camera module protrudes more severely on an appearance of the electronic device, affecting appearance delicacy of the electronic device.

Therefore, the camera module may be set to an elevating structure. For example, the camera module may include an elevating apparatus and a camera apparatus. The elevating apparatus may have an extended state and a retracted state. A part of the elevating apparatus may move up and down in a thickness direction, to implement switching between the extended state and the retracted state of the elevating apparatus.

The camera apparatus is disposed in the elevating apparatus, and at least a part of the camera apparatus may move in the elevating apparatus. For example, the camera apparatus may include a plurality of lenses, and at least a part of the plurality of lenses may be movably disposed. For example, all the plurality of lenses of the camera apparatus may be movably disposed, or at least some lenses adjacent to an object side in the plurality of lenses may be movably disposed, to adjust an optical distance between the lenses, thereby adjusting optical performance such as a focal length of the camera apparatus, and implementing a high-quality photographing function.

A quantity of lenses may be a positive integer greater than or equal to 2, and a material of the lens may include plastic, glass, or the like.

When the camera module performs photographing, the elevating apparatus may be in the extended state, to increase an internal space of the elevating apparatus, so that the camera apparatus can have a larger optical available space. For example, the lens of the camera apparatus may have a larger movable space, to meet a high-quality photographing requirement. When the camera module does not need to perform photographing, the elevating apparatus may be in the retracted state, so that the camera module has a smaller volume, thereby meeting a thinness design of the electronic device, and reducing impact on an appearance of the electronic device.

FIG. 4 is a diagram of a structure of the elevating apparatus in the retracted state in the camera module according to this application.

For example, refer to FIG. 4, the elevating apparatus 10 may include a base 11 and a cover plate 12. The base 11 may have an accommodation cavity (not shown in the figure), and the camera apparatus may be accommodated in the accommodation cavity of the base 11. The cover plate 12 may cover the base 11.

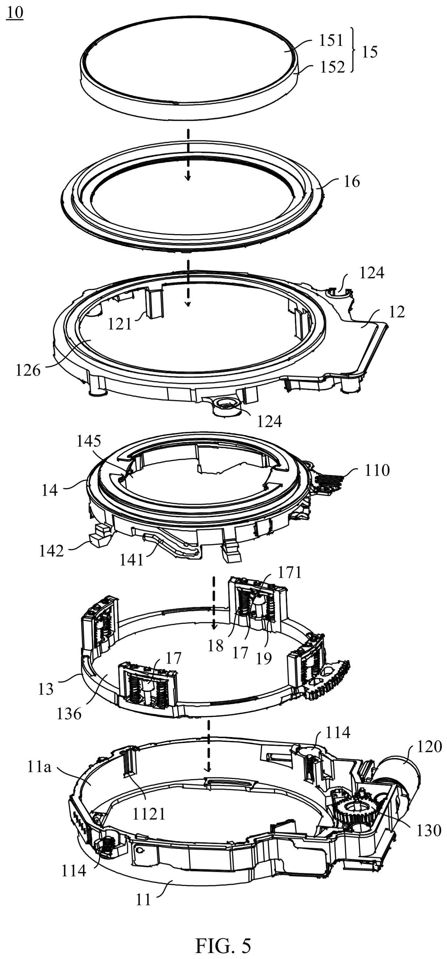

FIG. 5 is a diagram of a split structure of the elevating apparatus in FIG. 4.

Refer to FIG. 5. The elevating apparatus 10 may include an elevating member 14 and a rotating member 13. The rotating member 13 may be rotatably disposed in the accommodation cavity 11a of the base 11. For example, the accommodation cavity 11a of the base 11 may limit a space for rotation of the rotating member 13. The rotating member 13 may be sleeved in the base 11 and rotatably disposed relative to the base 11.

For example, the rotating member 13 may be a ring-shaped structure. For example, the rotating member 13 may be a structural member of an annular shape. The rotating member 13 has an avoidance hole 136 inside, to avoid movement of the camera apparatus.

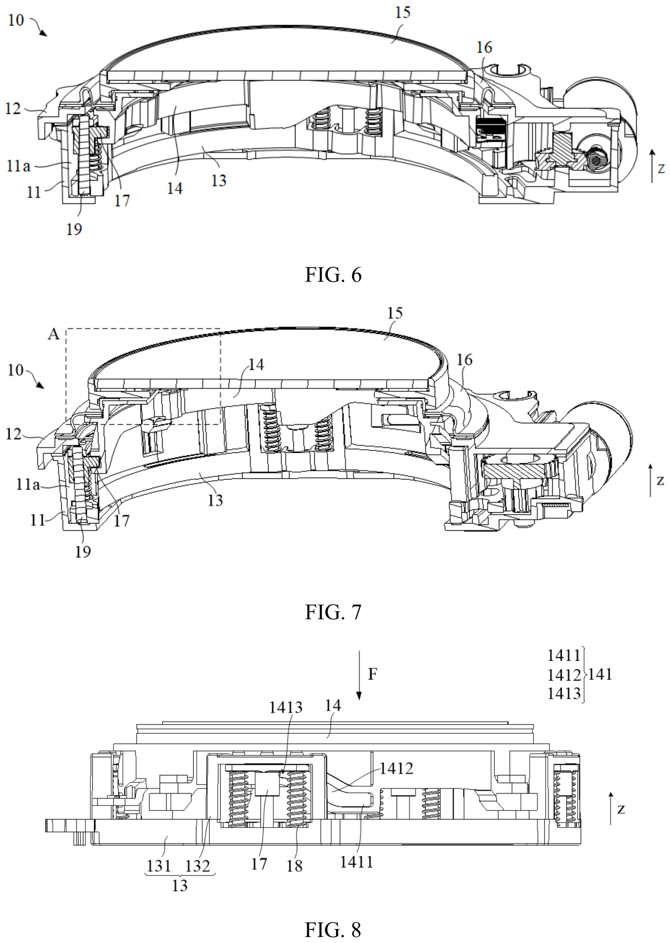

The elevating member 14 may be located on a side that is of the rotating member 13 and that faces the cover plate 12. The rotating member 13 and at least a part of the elevating member 14 may be located in the accommodation cavity 11a of the base 11 (refer to FIG. 6). For example, the elevating member 14 may be a ring-shaped structure. For example, the elevating member 14 may be a structural member of an annular shape. The elevating member 14 also has an avoidance hole 145 inside, to avoid movement of the camera apparatus.

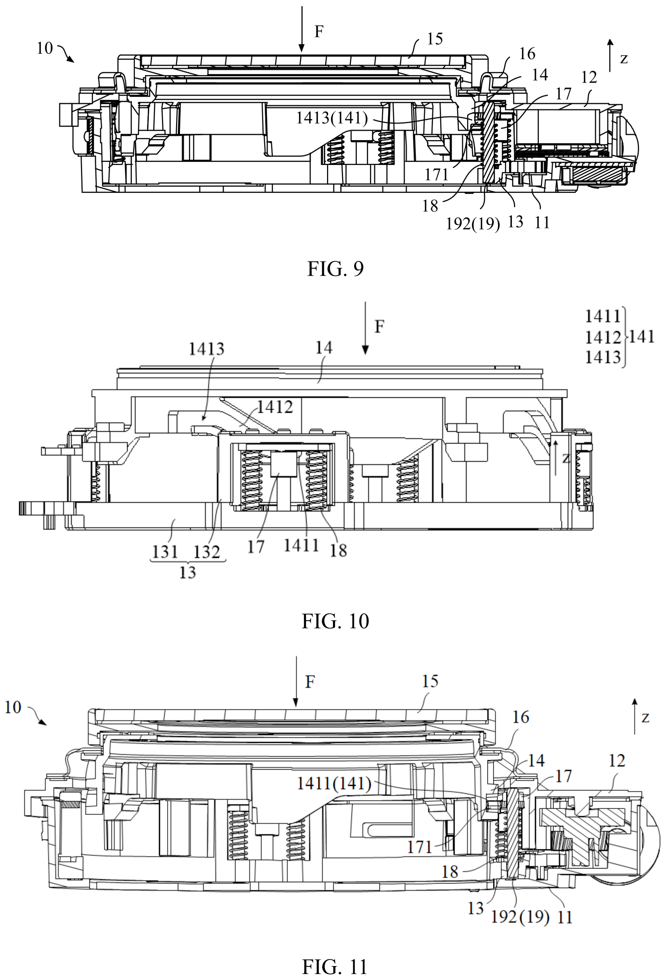

A linkage member 17 is disposed on one of the rotating member 13 and the elevating member 14, and the linkage member 17 cooperates with the other of the rotating member 13 and the elevating member 14. For example, the linkage member 17 may cooperate with the other of the rotating member 13 and the elevating member 14 via a guide rail to implement linkage. As shown in FIG. 5, the linkage member 17 may be assembled on the rotating member 13, the linkage member 17 may have a first slide block 171, the elevating member 14 may have a first slide rail 141 inclined in the thickness direction, and the first slide block 171 may be disposed in the first slide rail 141 and slide along the first slide rail 141 (refer to FIG. 11). In a rotation process of the rotating member 13, the linkage member 17 may be driven to rotate, and the first slide block 171 of the linkage member 17 slides along the inclined first slide rail 141, so that the elevating member 14 moves toward or away from the rotating member 13 in the thickness direction, to implement switching of the elevating apparatus 10 between the extended state and the retracted state.

In addition, an avoidance hole 126 may also be disposed on the cover plate 12, to avoid movement of the elevating member 14 and the camera apparatus.

Still refer to FIG. 5, the elevating apparatus 10 may further include a top protection cover 15. The top protection cover 15 covers an end portion of one end that is of the elevating member 14 and that faces away from the rotating member 13. When the elevating member 14 moves in the thickness direction, the top protection cover 15 is driven to move in the thickness direction. The top protection cover 15 may protect a structural component located on a side that is of the top protection cover 15 and that faces the base 11, for example, the elevating member 14 or the camera apparatus.

The top protection cover 15 may be located on a side that is of the cover plate 12 and that faces away from the base 11, or in some examples, the top protection cover 15 may be partially located in the accommodation cavity 11a enclosed by the cover plate 12 and the base 11, and the top protection cover 15 may move up and down through the avoidance hole on the cover plate 12.

The top protection cover 15 may include a light transmission portion 151 and a surrounding portion 152. The surrounding portion 152 is disposed around an outer periphery of the light transmission portion 151. The light transmission portion 151 may enable light to pass through and enter the elevating apparatus 10, and then enter the camera apparatus, to meet the photographing requirement of the camera apparatus.

For example, when the camera module is assembled on the electronic device, at least a part of the top protection cover 15 may protrude outside the rear cover of the electronic device.

The elevating apparatus 10 may further include a side protection sleeve 16, and the side protection sleeve 16 may surround an outer periphery of an end that is of the elevating member 14 and that faces away from the rotating member 13 (as shown in FIG. 6). The side protection sleeve 16 may protect a structural component located inside the side protection sleeve 16, for example, the elevating member 14.

For example, one end of the side protection sleeve 16 may be fastened to the cover plate 12, the other end of the side protection sleeve 16 may be fastened to the end that is of the elevating member 14 and that faces away from the rotating member 13, and the other end of the side protection sleeve 16 may move with up and down of the elevating member 14. For example, the side protection sleeve 16 may be a flexible structural member, for example, may be a rubber member, so that the side protection sleeve 16 can be deformed, and the other end of the side protection sleeve 16 can be ensured to move with up and down of the elevating member 14. The structure is simple and easy to implement.

Certainly, in some examples, the side protection sleeve 16 may alternatively be an extension member, and may extend or retract with up and down of the elevating member 14.

In some examples, the elevating apparatus 10 may further include a bottom protection plate (not shown in the figure), and the bottom protection plate may be fastened to a side that is of the base 11 and that faces away from the cover plate 12. For example, the bottom protection plate and the cover plate 12 are located on two opposite sides of the base 11 in the thickness direction. The camera apparatus may be assembled on the bottom protection plate.

FIG. 6 is a diagram of a sectional structure of the elevating apparatus in FIG. 4.

Refer to FIG. 6. For example, the rotating member 13 may be sleeved inside the base 11. In the thickness direction, the elevating member 14 and the rotating member 13 may have a stacked region, to reduce an overall thickness of the rotating member 13 and the elevating member 14. For example, the rotating member 13 and the elevating member 14 may be sleeved at least partially around each other. For example, at least a part of the elevating member 14 may be sleeved outside at least a part of the rotating member 13. Alternatively, at least a part of the rotating member 13 may be sleeved outside at least a part of the elevating member 14.

In the thickness direction, the elevating member 14 and the base 11 may also have a stacked region. For example, a part of the elevating member 14 may be sleeved inside the base 11, and a part of the elevating member 14 may protrude outside the accommodation cavity 11a of the base 11 through the avoidance hole of the cover plate 12.

Certainly, in some examples, in the thickness direction, the rotating member 13 (the base 11) and the elevating member 14 may be spaced apart, to avoid mutual interference between the rotating member 13 and the elevating member 14 in an assembly process.

The linkage member 17 may be disposed on the elevating member 14, and the linkage member 17 cooperates with the rotating member 13, so that when the rotating member 13 rotates, the rotating member 13 drives, via the linkage member 17, the elevating member 14 to move. Alternatively, the linkage member 17 may be disposed on the rotating member 13 (as shown in FIG. 5), and the linkage member 17 cooperates with the elevating member 14. In embodiments of this application, the retracted state and the extended state of the elevating apparatus 10 are described by using an example in which the linkage member 17 is disposed on the rotating member 13, and the linkage member 17 cooperates with the elevating member 14 to drive the elevating member 14 to move up and down in the thickness direction.

The linkage member 17 is disposed on the rotating member 13, and the rotating member 13 cooperates with the elevating member 14 via the linkage member 17. Still refer to FIG. 6. When the elevating apparatus 10 is in the retracted state, a larger part of the elevating member 14 may be located in the accommodation cavity 11a of the base 11, and a smaller part of the elevating member 14 may be located outside the accommodation cavity 11a. The part, of the elevating member 14, extending outside the accommodation cavity 11a has a small space gain in the thickness direction. In this case, a thickness of the elevating apparatus 10 is small, which facilitates thinness of the electronic device. In addition, a thickness of the entire camera module is small, and a thickness of a part, of the camera module, protruding from the electronic device is small, which reduces impact on the appearance of the electronic device.

It should be noted that, when the elevating apparatus 10 is in the retracted state, the camera apparatus may also be in a retracted state. In other words, a distance between movable lenses in the camera apparatus is short, so that the thickness of the camera apparatus is small, and the camera apparatus is ensured to be accommodated in the elevating apparatus 10, without affecting retraction of the elevating apparatus 10.

The rotating member 13 is driven to rotate (for example, the rotating member 13 is driven to rotate counterclockwise), so that the rotating member 13 drives the linkage member 17 to rotate, and the linkage member 17 drives the elevating member 14 to move in the thickness direction (for example, the z direction in the figure). For example, the elevating member 14 moves away from the rotating member 13 in the thickness direction, and the elevating member 14 and the top protection cover 15 move up relative to the base 11 (the accommodation cavity 11a), the cover plate 12, and the like in the thickness direction, so that the elevating apparatus 10 can finally be in the extended state.

FIG. 7 is a diagram of a sectional structure of the elevating apparatus in FIG. 4 when the elevating apparatus is in the extended state.

Refer to FIG. 7. When the elevating apparatus 10 is in the extended state, a smaller part of the elevating member 14 may be located in the accommodation cavity 11a of the base 11, and a larger part of the elevating member 14 may protrude outside the accommodation cavity 11a of the base 11. The part, of the elevating member 14, protruding outside the accommodation cavity 11a has a large space gain in the thickness direction, which increases the thickness of the elevating apparatus 10. In this case, the thickness of the elevating apparatus 10 is large, and the internal optical available space is large, that is, an available moving space of the camera apparatus is large, which can obtain better photographing quality.

Correspondingly, when the elevating apparatus 10 is in the extended state, the rotating member 13 is driven to rotate (for example, the rotating member 13 is driven to rotate clockwise), the rotating member 13 drives the linkage member 17 to rotate, and the linkage member 17 drives the elevating member 14 to move in the thickness direction. For example, the elevating member 14 moves toward the rotating member 13 in the thickness direction, and the elevating member 14 and the top protection cover 15 move down relative to the base 11 (the accommodation cavity 11a), the cover plate 12, and the like in the thickness direction, so that the elevating apparatus 10 can finally be in the retracted state.

It should be noted that the elevating apparatus 10 may alternatively be in an intermediate state between the extended state and the retracted state. To be specific, the elevating apparatus 10 can be switched between the extended state and the retracted state through cooperative movement of the rotating member 13, the linkage member 17, and the elevating member 14.

In a related technology, a linkage member is usually fastened on one of a rotating member or an elevating member, and the linkage member cooperates with the other member. For example, a first end of the linkage member may be fastened on the rotating member in a manner like bonding, welding, or integrally forming. A second end of the linkage member may cooperate with the elevating member. For example, the second end of the linkage member may have a slide block, the elevating member may have a slide rail inclined in the thickness direction, and the slide block may be disposed on the slide rail and slide along the slide rail. When the rotating member rotates, the rotating member drives the linkage member to rotate, and the slide block on the linkage member slides along the inclined slide rail, so that the elevating member moves up and down in the thickness direction.

However, in scenarios such as falling and pressing, an impact force acting on a camera module first acts on a top protection cover, and is transmitted to the elevating member, the linkage member, and the rotating member via the top protection cover. The elevating member, the linkage member, and the rotating member are structural components that move, and are light in weight and weak in strength, and are prone to problems such as yield deformation or fracture, causing damage to the camera module and an electronic device.

FIG. 8 is a diagram of a front view of a structure of the rotating member cooperating with the elevating member when the elevating apparatus in FIG. 6 is in the retracted state.

In embodiments of this application, refer to FIG. 8. The elevating apparatus includes an elastic member 18. The elastic member 18 is disposed on one, of the rotating member 13 and the elevating member 14, assembled with the linkage member 17. For example, the linkage member 17 is disposed on the rotating member 13, and the elastic member 18 is further disposed on the rotating member 13. The elastic member 18 is located between the linkage member 17 and the rotating member 13. Elastic extension and compression of the elastic member 18 are used to buffer an impact force, thereby reducing or avoiding damage to weak components such as the rotating member, the elevating member, or the linkage member, and improving stability and reliability of the camera module and the electronic device.

For example, when the elastic member 18 is disposed between the linkage member 17 and the rotating member 13, the elastic member 18 may be kept in a compressed state. The elastic member 18 can play perform buffering as long as the camera module receives external force impact in the thickness direction, thereby implementing full-process buffering and achieving good protection effect on the camera module.

It may be understood that when the elastic member 18 is disposed between the linkage member 17 and the rotating member 13, the elastic member 18 is kept in the compressed state. A rebound force of the retracted elastic member 18 can good support the linkage member 17 and the elevating member 14, ensure a stable assembly relationship between the linkage member 17 and the rotating member 13 when no external force impact is received, and ensure, when the rotating member 13 rotates to drive the elevating member 14 to move up and down, precision and smoothness of moving up and down of the elevating member 14 in the thickness direction. To be specific, in a scenario in which no external force impact is received, the elevating member 14 can move up and down by rotating the rotating member 13, so that the elevating apparatus is switched between the extended state and the retracted state, and the elastic member 18 keeps the current compressed state unchanged. In a scenario in which external force impact is received, the elastic member 18 is elastically extended and compressed under force to implement buffering, and does not drive the rotating member 13 to rotate, so that the extended state and the retracted state of the elevating apparatus keep unchanged.

Certainly, in some examples, the elastic member 18 is disposed between the linkage member 17 and the rotating member 13. When no external force impact is received, the elastic member 18 may alternatively be in a natural state, and is neither compressed nor extended.

For example, the linkage member 17 may be assembled on the rotating member 13, and an end that is of the linkage member 17 and that faces away from the rotating member 13 may have the protruding first slide block 171 (as shown in FIG. 5). The elevating member 14 may have the first slide rail 141, and the first slide block 171 may be inserted into the first slide rail 141 and slide along the first slide rail 141.

The first slide rail 141 may penetrate an outer wall surface and an inner wall surface of the rotating member 13 along a radial direction of the elevating member 14, or the first slide rail 141 may be formed by a groove disposed on an outer wall surface or an inner wall surface of the elevating member 14. The first slide block on the linkage member 17 may be located on an inner side of the elevating member 14, and the first slide block is inserted into the first slide rail 141 from the inner side of the elevating member 14. Alternatively, still refer to FIG. 8. The first slide block on the linkage member 17 may alternatively be located on an outer side of the elevating member 14, and the first slide block is inserted into the first slide rail 141 from the outer side of the elevating member 14.

It may be understood that in some possible examples, the first slide rail 141 may alternatively be disposed on the linkage member 17, and the first slide block 171 may alternatively be disposed on the elevating member 14.

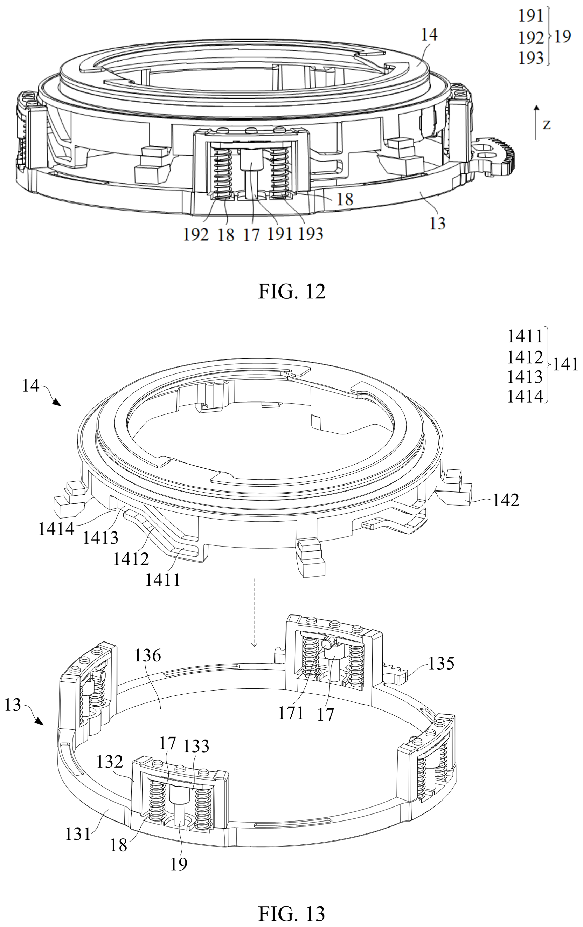

At least a part of the first slide rail 141 is disposed in an inclined manner. For example, refer to FIG. 8. The first slide rail 141 may include a first end portion 1411, a second end portion 1413, and an inclined section 1412 located between the first end portion 1411 and the second end portion 1413 (refer to FIG. 13). The inclined section 1412 is disposed in an inclined manner in the thickness direction (the z direction). Therefore, when sliding along the inclined section 1412, the first slide block and the linkage member 17 can apply an action force to the elevating member 14 in the thickness direction, so that the elevating member 14 moves up and down in the thickness direction.

For example, the first end portion 1411 may be disposed closer to a main body portion 131 of the rotating member 13, and the second end portion 1413 may be disposed farther away from the main body portion 131 of the rotating member 13. The inclined section 1412 is connected to the first end portion 1411 and the second end portion 1413. To be specific, in a direction from the first end portion 1411 to the second end portion 1413, the inclined section 1412 may be inclined in a direction away from the main body portion 131 of the rotating member 13.

When the first slide block of the linkage member 17 is located at the second end portion 1413 of the first slide rail 141, the elevating apparatus 10 may be in the retracted state.

FIG. 9 is a front view of another sectional structure of the elevating apparatus in FIG. 6 in the retracted state.

When the elevating apparatus 10 is in the retracted state, in scenarios such as falling and pressing, the camera module receives external force impact. The impact force usually includes a downward force in the thickness direction, for example, an external force F in the figure. As shown in FIG. 10, the external force F first acts on the top protection cover 15, the top protection cover 15 moves downward, and the top protection cover 15 transmits the external force F to the elevating member 14. As shown in FIG. 8, the external force F is transmitted to the linkage member 17, the elastic member 18, and the rotating member 13 via the elevating member 14. The elastic member 18 may be compressed, to buffer the external force F via the elastic member. In a process of buffering the impact external force, the first slide block of the linkage member 17 remains at the second end portion 1413.

The rotating member 13 is driven to rotate, the rotating member 13 drives the linkage member 17 to rotate, and the first slide block 171 of the linkage member 17 slides along the first slide rail 141 towards the inclined section 1412 and the first end portion 1411 (as shown in FIG. 8), to further drive the elevating member 14 to move in the thickness direction (z direction).

FIG. 10 is a diagram of a front view of a structure of the rotating member cooperating with the elevating member when the elevating apparatus in FIG. 7 is in the extended state.

Refer to FIG. 10. When the first slide block of the linkage member 17 on the rotating member 13 is located at the first end portion 1411, the elevating apparatus 10 may be in the extended state.

FIG. 11 is a front view of another sectional structure of the elevating apparatus in FIG. 7 in the extended state.

Correspondingly, when the elevating apparatus 10 is in the extended state, refer to FIG. 11, in scenarios such as falling and pressing, an external force F acts on the top protection cover 15, the top protection cover 15 moves downward, and the top protection cover 15 transmits the external force F to the elevating member 14. As shown in FIG. 10, the external force F is transmitted to the linkage member 17, the elastic member 18, and the rotating member 13 via the elevating member 14. The elastic member 18 may be compressed, to buffer the external force F via the elastic member. In a process of buffering the impact external force, the first slide block of the linkage member 17 remains at the first end portion 1411.

Certainly, in some examples, the linkage member 17 may be alternatively assembled on the elevating member 14. An end that is of the linkage member 17 and that faces away from the elevating member 14 may have a protruding first slide block 171. The rotating member 13 may have a first slide rail 141. The first slide block 171 may be inserted into the first slide rail 141 and slide along the first slide rail 141. This can further implement linkage in which the rotating member 13 rotates and drives, via the linkage member 17, the elevating member 14 to move up and down.

FIG. 12 is a diagram of assembly of the rotating member, the elevating member, and the linkage member in the elevating apparatus in FIG. 6.

Refer to FIG. 12. The elevating apparatus 10 further includes at least two guide members 19. The linkage member 17 is located on the at least two guide members 19. The at least two guide members 19 are configured to guide sliding of the linkage member 17. In the buffering scenarios such as falling and pressing, the linkage member 17 may slide in the thickness direction.

For example, the guide member 19 may be a columnar guide structure, and an extension direction of the guide member 19 may be consistent with the thickness direction. The linkage member 17 may be sleeved outside the at least two guide members 19, so that the linkage member 17 can slide upward and downward in the extension direction of the guide members 19. The guide members 19 limit a movement direction of the linkage member 17, so that the linkage member 17 slides in the thickness direction, ensure that in the buffering scenarios such as falling and pressing, the linkage member 17 slides only in the thickness direction, and does not tilt or rotate forward and backward (in a rotation radial direction of the rotating member 13) or leftward and rightward (in a rotation tangential direction of the rotating member 13), improve smoothness of buffering under impact, and avoid problems such as buffering stuttering and buffering failure caused by scratching between the linkage member 17 and the rotating member 13.

It may be understood that there are at least two guide members 19. For example, the at least two guide members 19 may be spaced apart in a circumferential direction of the rotating member 13. The at least two guide members 19 can limit the linkage member 17, to prevent the linkage member 17 from rotating around the guide member 19, further ensure that the linkage member 17 moves in the thickness direction under action of the guide members 19, and help avoid the problems such as buffering failure and buffering stuttering.

The elastic member 18 may be located on at least one of the at least two guide members 19. For example, refer to FIG. 12. There are three guide members 19, for example, a first guide member 191, a second guide member 192, and a third guide member 193. The linkage member 17 may be sleeved on at least one of the first guide member 191, the second guide member 192, and the third guide member 193. For example, the elastic member 18 may be disposed on the second guide member 192 and the third guide member 193, and the elastic member 18 is located between the linkage member 17 and the rotating member 13.

It should be noted that the elastic member 18 may be located on any one or more of the first guide member 191, the second guide member 192, and the third guide member 193. For example, the elastic member 18 may be disposed on one of the first guide member 191, the second guide member 192, and the third guide member 193; or the elastic member 18 may be disposed on all of the first guide member 191, the second guide member 192, and the third guide member 193; or the elastic member 18 may be disposed on the first guide member 191 and the second guide member 192; or the elastic member 18 may be disposed on the first guide member 191 and the third guide member 193.

The guide member 19 on which the elastic member 18 is disposed may also guide extension and compression of the elastic member 18. In the buffering scenarios such as falling and pressing, the elastic member 18 may extend and compress in the thickness direction. For example, the elastic member 18 may be sleeved on the guide member 19 extending in the thickness direction, so that the elastic member 18 extends and compresses in the thickness direction under guidance of the guide member 19. This helps ensure smoothness of movement of the linkage member 17 in the thickness direction during elastic buffering, and also helps improve smoothness of buffering under impact.

The following describes a manner of assembling the linkage member 17 when the linkage member 17 is located on the rotating member 13.

FIG. 13 is a diagram of a split structure of the rotating member and the elevating member in FIG. 10.

Refer to FIG. 13. The rotating member 13 includes a main body portion 131 and a mounting portion 132. The main body portion 131 may be a ring-shaped structure, and the main body portion 131 has an avoidance hole 136 inside for avoiding the camera apparatus.

The mounting portion 132 is fastened to the main body portion 131, and an accommodation space 133 is enclosed between the main body portion 131 and the mounting portion 132. The linkage member 17 is at least partially disposed in the accommodation space 133. For example, the linkage member 17 may be partially located in the accommodation space 133 and partially extend outside the accommodation space 133, to be inserted into and cooperated with the first slide rail 141 of the elevating member 14. The elastic member 18 is also located in the accommodation space 133, and is located between the linkage member 17 and the main body portion 131. Correspondingly, the guide member 19 is also located in the accommodation space 133.

The first slide rail 141 of the elevating member 14 may further include a notch 1414. The notch 1414 may be in communication with the second end portion 1413. The notch 1414 may extend to a surface that is of the elevating member 14 and that faces the rotating member 13, so that during assembly, the first slide block 171 of the linkage member 17 can be inserted into the first slide rail 141 via the notch 1414.

For example, the mounting portion 132 may be fastened to the main body portion 131 through welding, bonding, or the like. However, in the buffering scenarios such as falling and pressing, when an external force acts on the linkage member 17 and the elastic member 18 and causes the elastic member 18 to compress, the rebound force of the elastic member 18 reversely acts on the linkage member 17, for example, pushes the linkage member 17 upward (away from the main body portion 131) in the thickness direction. The linkage member 17 acts on the mounting portion 132, which easily causes the mounting portion 132 to fall off and separate from the main body portion 131. As a result, assembly stability of the linkage member 17, the elastic member 18, and the like is low, and the problems such as buffering failure are easily caused.

In embodiments of this application, the main body portion 131 and the mounting portion 132 may be integrally formed, that is, the rotating member 13 formed by the main body portion 131 and the mounting portion 132 is an integrated structural member, and the mounting portion 132 and the main body portion 131 have high bonding strength. The linkage member 17 is disposed in the accommodation space 133 enclosed by the mounting portion 132 and the main body portion 131, to significantly improve assembly strength of the elastic member 18 and the linkage member 17 on the rotating member 13. This reduces or avoids damage to the mounting portion 132 (a top wall of the mounting portion 132) under rebound effect of the elastic member 18, further avoids a buffering failure problem, and improves reliability of resisting the impact force in the buffering scenarios such as falling and pressing.

A plurality of mounting portions 132 may be disposed on the rotating member 13, and each mounting portion 132 may enclose an accommodation space 133 with the main body portion 131. One linkage member 17, one elastic member 18, and at least two guide members 19 are disposed in the accommodation space 133.

For example, four mounting portions 132 may be disposed on the rotating member 13, to form four accommodation spaces 133. The four mounting portions 132 may be evenly disposed in a circumferential direction of the main body portion 131, to improve smoothness of driving, by the rotating member 13, the elevating member 14 to move up and down in the thickness direction, and improve smoothness of buffering in the scenarios such as falling and pressing.

For example, if each accommodation space 133 has one linkage member 17, three guide members 19, and two elastic members 18, the rotating member 13 has four linkage members 17, 12 guide members 19, and eight elastic members 18 in total. This can implement effective buffering, provide stable guiding in a buffering process, and improve smoothness of buffering.

Certainly, in some other examples, a quantity of mounting portions 132 may be two or more other positive integers, and the plurality of mounting portions 132 may be evenly disposed in the circumferential direction of the main body portion 131.

It may be understood that when the linkage member 17 is disposed on the elevating member 14, the elevating member 14 may also include a mounting portion 132 and a main body portion 131 that are integrally formed. The main body portion 131 may also be a ring-shaped structure, and has an avoidance hole inside for avoiding the camera apparatus. The mounting portion 132 and the main body portion 131 enclose an accommodation space 133, and the linkage member 17, the elastic member 18, and the guide member 19 are located in the accommodation space 133.

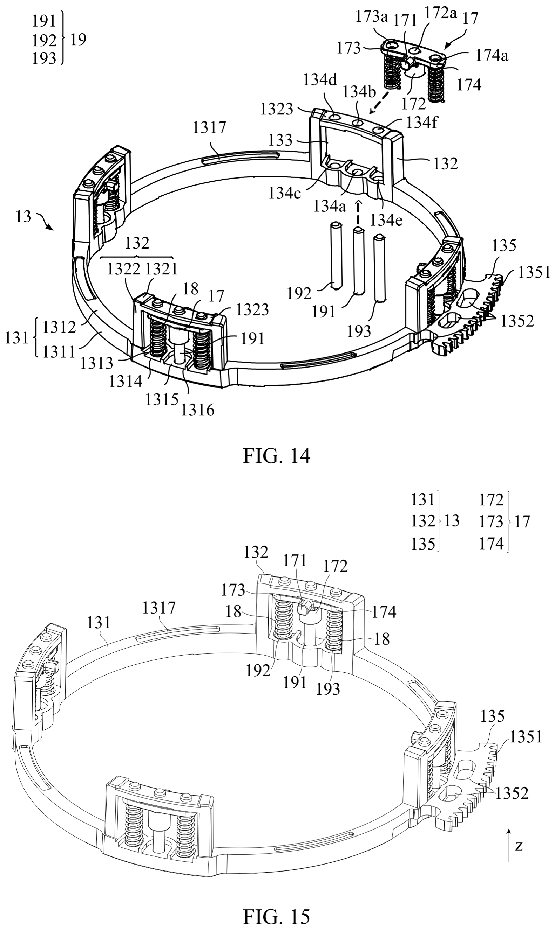

FIG. 14 is a diagram of a split of a partial structure of the rotating member in FIG. 13.

Because the mounting portion 132 and the main body portion 131 are integrally formed, to facilitate assembly of the guide member 19, the elastic member 18, and the linkage member 17, a first through hole may be disposed on at least one of the mounting portion 132 and the main body portion 131. The guide member 19 may pass through the first through hole and be fastened in the first through hole, so that the guide member 19 can be fastened in the accommodation space 133 enclosed by the mounting portion 132 and the main body portion 131. The guide member 19 may be separately fastened to the main body portion 131 and the mounting portion 132, so that the linkage member 17, the elastic member 18, and the guide member 19 are all disposed in the accommodation space 133.

The first through hole is on the at least one of the mounting portion 132 and the main body portion 131. Therefore, assembly and fastening of the guide member 19 is implemented. An assembly operation is simple, and mounting is easy to implement. In addition, no additional assembly member needs to be disposed for implementation. This reduces a component structure, reduces costs, does not occupy a space in the thickness direction, and facilitates a thinning design of the elevating apparatus.

For example, the guide member 19 may be a guide post, and an inner diameter of the first through hole may be greater than an outer diameter of the guide member 19, so that the guide member 19 can pass through the first through hole and enter the accommodation space 133, to implement fastening of the guide member 19 to the mounting portion 132 and the main body portion 131.

For example, refer to FIG. 14. The first guide member 191 is used as an example. A first through hole 134a may be disposed on the main body portion 131, and a first through hole 134b may be disposed on the mounting portion 132. During actual assembly, the linkage member 17 and the elastic member 18 may be first placed in the accommodation space 133, so that a first end of the first guide member 191 can pass through the first through hole 134a and enter the accommodation space 133, and pass through the linkage member 17 and be inserted into the first through hole 134b. In this case, a second end of the first guide member 191 may be located in the first through hole 134a. An outer wall of the first end of the first guide member 191 may be fastened to an inner wall of the first through hole 134b, and an outer wall of the second end of the first guide member 191 may be fastened to an inner wall of the first through hole 134a in a manner like welding, bonding, clamping connection, or the like, to implement fastening and assembly of the first guide member 191 and the linkage member 17 in the accommodation space 133.

Similarly, the second guide member 192 and the third guide member 193 may also be fastened in the same manner. For example, a first end of the second guide member 192 may pass through a first through hole 134c on the main body portion 131 and enter the accommodation space 133, and pass through the elastic member 18 and the linkage member 17 and be inserted into a first through hole 134d on the mounting portion 132. In this case, a second end of the second guide member 192 is located in the first through hole 134c on the main body portion 131. The first end of the second guide member 192 is fastened to the first through hole 134c on the mounting portion 132, and the second end of the second guide member 192 is fastened to the first through hole 134d on the main body portion 131, to implement fastening and assembly of the second guide member 192, the linkage member 17, and the elastic member 18 in the accommodation space 133.

For example, a first end of the third guide member 193 may pass through a first through hole 134e on the main body portion 131 and enter the accommodation space 133, and pass through the elastic member 18 and the linkage member 17 and be inserted into a first through hole 134f on the mounting portion 132. In this case, a second end of the third guide member 193 is located in the first through hole 134e on the main body portion 131. The first end of the third guide member 193 is fastened to the first through hole 134f on the mounting portion 132, and the second end of the third guide member 193 is fastened to the first through hole 134e on the main body portion 131, to implement fastening and assembly of the third guide member 193, the linkage member 17, and the elastic member 18 in the accommodation space 133.

For example, still refer to FIG. 14. The mounting portion 132 may include a top wall 1321 and two extension walls 1322. The top wall 1321 may be opposite to the main body portion 131. Two ends of the top wall 1321 are respectively connected to the main body portion 131 via the extension walls 1322. The top wall 1321, the extension walls 1322, and the main body portion 131 enclose the accommodation space 133.

The first through holes may be disposed on both the top wall 1321 and the main body portion 131. For example, the top wall 1321 has the first through hole 134b, the first through hole 134d, and the first through hole 134f, and the main body portion 131 has the first through hole 134a, the first through hole 134c, and the first through hole 134e, so that two ends of the guide member 19 are respectively inserted into and fastened to the top wall 1321 and the main body portion 131.

A first groove 1323 may be disposed on a surface that is of the top wall 1321 and that faces away from the main body portion 131. The first through hole may be disposed on a bottom wall of the first groove 1323. For example, the first through hole 134b, the first through hole 134d, and the first through hole 134f may be disposed on the bottom wall 111 of the first groove 1323.

The elevating apparatus may further include a first connection member (not shown in the figure), and one end of the guide member 19 may be fastened in the first through hole 134 via the first connection member. For example, the first connection member may be a welding member, a bonding member, a clamping member, or the like, so that the guide member 19 is fastened to the mounting portion 132 and the main body portion 131 in a manner like welding, bonding, clamping, or the like.

The first connection member may be located in the first groove 1323, which can facilitate positioning during assembly. In addition, the recessed first groove 1323 can spare a space in the thickness direction, so that the first connection member is fastened in the first groove 1323, and the first connection member can occupy fewer spaces or no space in the thickness direction.

For example, the main body portion 131 may include a top surface 1312 and an outer side surface 1311. The top surface 1312 may be opposite to the top wall 1321 of the mounting portion 132, and the outer side surface 1311 may be located on an outer side of the top surface 1312. The outer side of the top surface 1312 is a side that faces away from an internal center of the ring-shaped main body portion 131.

A first positioning slot 1313 may be disposed on the top surface 1312, an opening 1314 is disposed on the outer side surface 1311, and the opening 1314 communicates with the first positioning slot 1313. In this way, during assembly, the elastic member 18 may be inserted and disposed in the first positioning slot 1313 via the opening 1314, to implement precise positioning of the elastic member 18 during assembly, and also facilitate sleeve cooperation with the elastic member 18 when the guide member 19 is mounted.

It may be understood that a quantity of first positioning slots 1313 and a quantity of openings 1314 may correspond to a quantity of elastic members 18.

For example, a second positioning slot 1315 may be further disposed on the top surface 1312, and the first guide member 191 may be located in the second positioning slot 1315. The second positioning slot 1315 can assist positioning in precise assembly of the first guide member 191 and the linkage member 17. For example, when the linkage member 17 is assembled in the accommodation space 133, the second positioning slot 1315 may correspond to a matching portion 172 of the linkage member 17, to improve precise positioning of the linkage member 17, and also facilitate sleeve cooperation with the matching portion 172 of the linkage member 17 when the first guide member 191 is mounted.

As shown in FIG. 14, an opening 1316 may be further disposed on the outer side surface 1311 of the main body portion 131, and the opening 1316 may be in communication with the second positioning slot 1315.

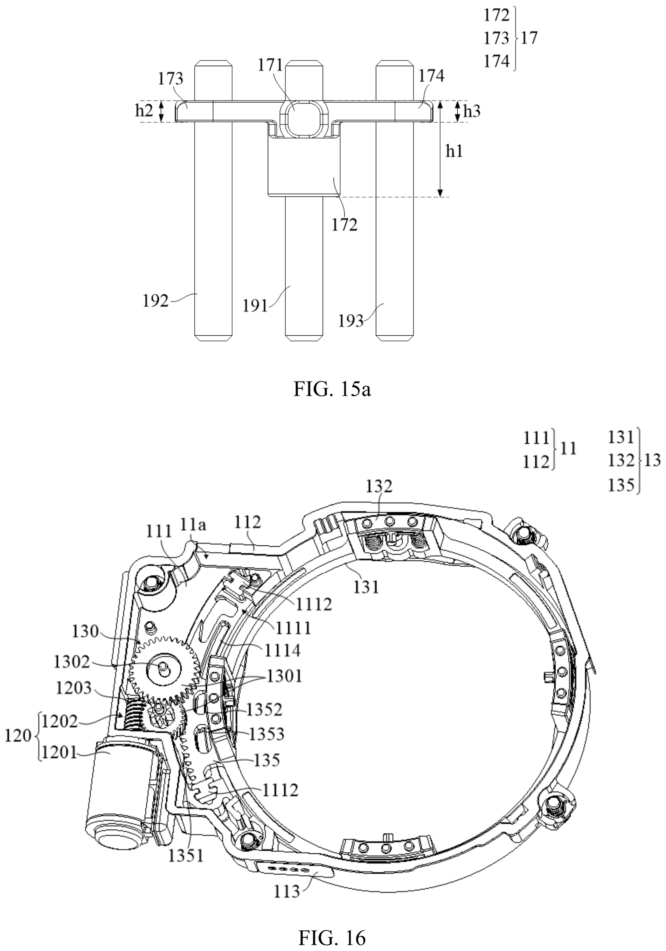

FIG. 15 is a diagram of a structure of the rotating member in FIG. 14.

For example, refer to FIG. 15. There may be three guide members 19 in each accommodation space 133, for example, a first guide member 191, a second guide member 192, and a third guide member 193. The second guide member 192 and the third guide member 193 are located on two sides of the first guide member 191. For example, the second guide member 192 and the third guide member 193 may be located on two sides of the first guide member 191 in a rotation direction of the rotating member 13.

The linkage member 17 may include a matching portion 172, a first extension portion 173, and a second extension portion 174 that are connected. The first slide block 171 of the linkage member 17 may be disposed on the matching portion 172, so that the linkage member 17 can be inserted into and cooperated with the first slide rail on the elevating member via the first slide block 171 on the matching portion 172.

The first extension portion 173 and the second extension portion 174 may be respectively located on two sides of the matching portion 172. For example, the first extension portion 173 and the second extension portion 174 may be located on two sides of the matching portion 172 in the rotation direction of the rotating member 13.

The matching portion 172 may be disposed around the first guide member 191, the first extension portion 173 may be disposed around the second guide member 192, and the second extension portion 174 may be disposed around the third guide member 193. For example, the matching portion 172 may have a first coordination hole 172a (refer to FIG. 14), and the matching portion 172 may be sleeved on the first guide member 191 via the first coordination hole 172a. The first extension portion 173 has a second coordination hole 173a (refer to FIG. 14), and the first extension portion 173 is sleeved on the second guide member 192 via the second coordination hole 173a. The second extension portion 174 also has a third coordination hole 174a (refer to FIG. 14), and the second extension portion 174 is sleeved on the third guide member 193 via the third coordination hole 174a.

For example, a thickness of the matching portion 172 may be greater than a thickness of the first extension portion 173. It should be noted that, in embodiments of this application, the thickness is a height in the thickness direction. The thickness of the matching portion 172 may be a distance between a surface that is of the matching portion 172 and that faces the main body portion 131 and a surface that is of the matching portion 172 and that faces the top wall of the mounting portion 132 in the thickness direction (z direction). The thickness of the first extension portion 173 may also be a distance between a surface that is of the first extension portion 173 and that faces the main body portion 131 and a surface that is of the first extension portion 173 and that faces the top wall of the mounting portion 132.

FIG. 15a is a diagram of a front view of a structure of assembly of the linkage member and the guide members in FIG. 15. For example, the thickness of the matching portion 172 may be h1 in FIG. 15a, and the thickness of the first extension portion 173 may be h2 in FIG. 15a, where h1 is greater than h2.

In other words, in the thickness direction, a distance between the matching portion 172 and the first guide member 191 that are for guiding and cooperation is greater than a distance between the first extension portion 173 and the second guide member 192 that are for guiding and cooperation, and guiding effect between the first guide member 191 and the matching portion 172 is better than guiding effect between the first extension portion 173 and the second guide member 192. The first guide member 191 can implement precise positioning of the matching portion 172 (namely, the linkage member 17), and the second guide member 192 can implement coarse positioning of the first extension portion 173 (namely, the linkage member 17). Combination of the precise positioning and the coarse positioning is used to ensure smooth guiding in the buffering scenarios, and be conducive to reducing a mounting precision requirement and mounting difficulty, improve assemblability, and facilitate assembly implementation.

A thickness of the second extension portion 174 may also be less than the thickness of the matching portion 172. The thickness of the second extension portion 174 may also be a distance between a surface that is of the second extension portion 174 and that faces the main body portion 131 and a surface that is of the first extension portion 173 and that faces the top wall of the mounting portion 132 in the thickness direction (refer to FIG. 15). The thickness of the second extension portion 174 may be h3 shown in FIG. 15a, where h1 is greater than h3. The third guide member 193 implements coarse positioning of the linkage member 17, which has better mass production assembly implementability.

The thickness of the first extension portion 173 may be consistent with the thickness of the second extension portion 174. Certainly, in some examples, the thickness of the first extension portion 173 may alternatively be inconsistent with the thickness of the second extension portion 174.

Still refer to FIG. 15. The elastic member 18 may be disposed around the second guide member 192, and the elastic member 18 is located between the first extension portion 173 and the main body portion 131. No elastic member 18 is disposed on the first guide member 191 on which the matching portion 172 is disposed, because the thickness of the matching portion 172 is large. The elastic member 18 is located at the second guide member 192 when an overall height requirement of the rotating member 13 is small, to help ensure that the elastic member 18 has a long extension and compression path. This implements more effective buffering effect, ensures buffering effect, and helps reduce a thickness of the rotating member 13 and the thickness of the entire elevating apparatus.

The elastic member 18 may alternatively be disposed around the third guide member 193, and the elastic member 18 is located between the second extension portion 174 and the main body portion 131. A structure design of two elastic members 18 in one mounting portion 132 can implement better buffering effect.

Alternatively, in some examples, there may alternatively be two guide members 19 in each accommodation space 133, for example, only the first guide member 191 and the second guide member 192 are included. Correspondingly, the linkage member 17 may alternatively include only the matching portion 172 and the first extension portion 173.

For example, a range of a ratio of the thickness of the matching portion 172 to the thickness of the first extension portion 173 is from 3.5 to 5, and a range of a ratio of the thickness of the matching portion 172 to the thickness of the second extension portion 174 is also from 3.5 to 5. A structure of the linkage member is appropriately designed, so that the linkage member and the guide member are better guided and cooperated in a precise positioning manner combining with a coarse positioning manner, smoothness of buffering is high, and mass production assembly is high.

It should be noted that, for ease of assembly implementation, the matching portion 172 surrounds the first guide member 191, and there is a spacing between the matching portion 172 and the first guide member 191. For example, if the matching portion 172 is sleeved on the first guide member 191 via the first coordination hole, there is a spacing between a circumferential inner surface of the first coordination hole and a circumferential outer surface of the first guide member 191.

The spacing between an inner surface of the matching portion 172 and the outer surface of the first guide member 191 may range from 5 µm to 10 µm. This further improves guiding precision of the first guide member 191 for the matching portion 172 (the linkage member 17), ensures precise positioning guiding of the first guide member 191 for the linkage member 17, and better improves smoothness of buffering.

Correspondingly, there is also a spacing between an inner surface of the first extension portion 173 and an outer surface of the second guide member 192. To be specific, there is a spacing between a circumferential inner surface of the second coordination hole and a circumferential outer surface of the second guide member 192. A range of the spacing may be from 20 µm to 30 µm.

There is also a spacing between an inner surface of the second extension portion 174 and an outer surface of the third guide member 193. To be specific, there is a spacing between a circumferential inner surface of the third coordination hole and a circumferential outer surface of the third guide member 193. A range of the spacing may also be from 20 µm to 30 µm. This implements coarse positioning guiding of the second guide member 192 and the third guide member 193 for the linkage member 17, ensures high smoothness of buffering, and better facilitates assembly implementation.

The first extension portion 173, the second extension portion 174, and the matching portion 172 may be integrally formed, or may be separately formed and assembled together in a manner like bonding, welding, thread fastening, buckle connection, or the like.

In embodiments of this application, the elastic member 18 is disposed around the guide member 19. For example, the elastic member 18 may be partially disposed around the guide member 19. For example, the elastic member 18 may include a head end and a tail end that are opposite to each other in the thickness direction, and only the head end or the tail end of the elastic member 18 may be sleeved on the guide member 19.

Alternatively, the guide member 19 may extend from the head end of the elastic member 18 to the tail end of the elastic member 18. In the thickness direction, a height of the guide member 19 may be greater than or equal to a height of the elastic member 18. It may be understood that the height of the elastic member 18 is a height of the elastic member 18 in a compressed state, in the thickness direction, in the accommodation space 133 of the mounting base. For example, refer to FIG. 15. The second guide member 192 is used as an example. A height of the second guide member 192 is greater than the height of the elastic member 18. On the entire extension and compression path of the elastic member 18, the second guide member 192 can perform guiding. This ensures extension and compression of the elastic member 18 in the thickness direction, better improves smoothness of buffering, and avoids the problems such as buffering stuttering and buffering failure.

Still refer to FIG. 15. The rotating member 13 further includes a transmission portion 135. The transmission portion 135 is fastened to the main body portion 131. For example, the transmission portion 135 may be fastened to the outer side surface of the main body portion 131.

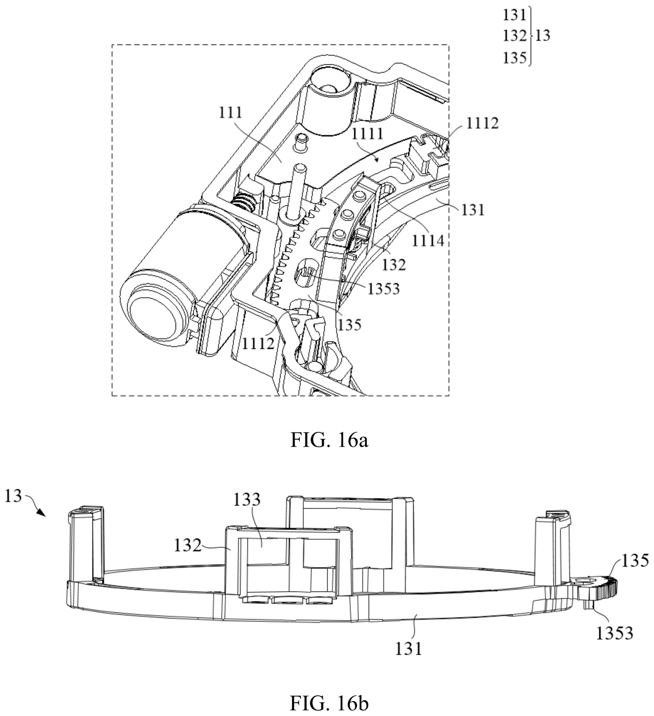

FIG. 16 is a diagram of a structure of assembly of the base and the rotating member in the elevating apparatus in FIG. 4.

Refer to FIG. 16. A drive mechanism 120 and a transmission mechanism 130 may further be disposed in the accommodation cavity 11a of the base 11. The transmission mechanism 130 cooperates with the drive mechanism 120 and the rotating member 13, for example, the transmission mechanism 130 may cooperate with the transmission portion 135 of the rotating member 13, so that the drive mechanism 120 drives, via the transmission mechanism 130, the rotating member 13 to rotate.

The drive mechanism 120 may be an electric drive mechanism, a pneumatic drive mechanism, a hydraulic drive mechanism, or the like. The transmission mechanism 130 may be a worm gear transmission mechanism, a gear transmission mechanism, an electromagnetic transmission mechanism, or the like.

For example, the drive mechanism 120 may include a drive portion 1201 and an output shaft 1202. For example, the drive mechanism 120 may be an electric motor, a motor body may be used as the drive portion 1201, and a rotating shaft of the motor may be used as the output shaft 1202. A first tooth structure 1203 may be disposed on the output shaft 1202.

The transmission mechanism 130 may be a gear component, and the gear component may include a plurality of gears 1301. A rotating shaft 1302 may be disposed on the base 11, the plurality of gears 1301 are rotatably disposed on the rotating shaft 1302, and the plurality of gears 1301 implement engaging and linkage.

A second tooth structure 1351 (as shown in FIG. 15) may be disposed on an outer side wall 112 of the transmission portion 135. The output shaft 1202 of the drive mechanism 120 may engage and cooperate with the gear 1301 of the transmission mechanism 130 via the first tooth structure 1203. The gear 1301 of the transmission mechanism 130 may engage with the second tooth structure 1351 on the transmission portion 135 of the rotating member 13. The drive portion 1201 of the drive mechanism 120 drives the output shaft 1202 to rotate, the output shaft 1202 drives the gear 1301 of the transmission mechanism 130 to rotate, and the transmission mechanism 130 drives the transmission portion 135 and the rotating member 13 to rotate.

To further improve reliability, refer to FIG. 16. A plurality of weight reduction slots 1352 (as shown in FIG. 15) may be disposed on the transmission portion 135, to reduce a weight of the transmission portion 135 and a weight of the entire rotating member 13, reduce a moment of inertia, and further reduce or avoid a problem of damage to the transmission portion 135 caused by impact between the transmission portion 135 and the base 11 due to the moment of inertia. In addition, this can reduce a rotational impact force caused by the weight of the transmission portion 135 on a gear component (the transmission mechanism 130) in processes such as falling, and protect the transmission mechanism 130.

To limit rotation of the rotating member 13 in the base 11, for example, still refer to FIG. 16. The base 11 may include a bottom wall 111 and a side wall 112, the side wall 112 is enclosed around the bottom wall 111, and the side wall 112 and the bottom wall 111 jointly enclose the accommodation cavity 11a of the base 11. The cover plate is covered on an end that is of the side wall 112 and that faces away from the bottom wall 111, and the rotating member 13 is located above a side that is of the bottom wall 111 and that faces the cover plate.

FIG. 16a is an enlarged diagram of a partial structure of assembly of the base and the rotating member in FIG. 16.

Refer to FIG. 16a. A limiting slot 1111 may be further disposed on the base 11. For example, the bottom wall 111 of the base 11 has the limiting slot 1111, and an opening of the limiting slot 1111 faces the rotating member 13. The transmission portion 135 of the rotating member 13 may pass through the opening and extend into the limiting slot 1111. In other words, the transmission portion 135 rotates in the limiting slot 1111. The limiting slot 1111 performs limiting, to ensure reliable rotation of the rotating member 13 in the base 11. In addition, an arc degree of rotation of the rotating member 13 may be limited by designing the limiting slot 1111, to adjust an elevating height of the elevating member 14 and meet different requirements.

As shown in FIG. 16. Cushions 1112 may be disposed at two ends of the limiting slot 1111 in the rotation direction of the rotating member 13, and the cushion 1112 at least partially may protrude in the limiting slot 1111. When the transmission portion 135 rotates to the two ends of the limiting slot 1111, the transmission portion 135 may be in contact with the cushions 1112. The cushion 1112 can perform buffering, to reduce or avoid a problem of an abnormal sound caused by direct impact between the transmission portion 135 and the end portion of the limiting slot 1111, thereby improving use experience.

The cushion 1112 may be an adhesive pad. Certainly, in some other examples, the cushion 1112 may be another structural member that can perform buffering.

Still as shown in FIG. 16 and FIG. 16a, an arc-shaped second slide rail 1114 may be further disposed on the bottom wall 111, and the second slide rail 1114 may be located in the limiting slot 1111.

FIG. 16b is a diagram of a structure of the rotating member in FIG. 16.

Refer to FIG. 16b. The transmission portion 135 has a protruding second slide block 1353. As shown in FIG. 16a, the second slide block 1353 is located on a surface that is of the transmission portion 135 and that faces the bottom wall 111. The second slide block 1353 may be inserted into the second slide rail 1114 and slide along the second slide rail 1114, to further ensure rotation stability of the rotating member 13.

Certainly, in some examples, the second slide rail 1114 may be disposed on the transmission portion 135 of the rotating member 13, and the second slide block 1353 may be disposed on the bottom wall 111 of the base 11.

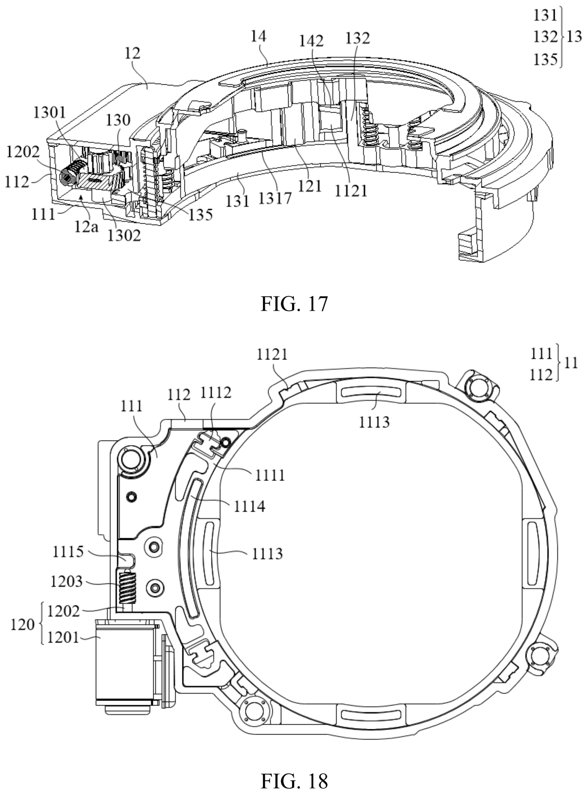

A surface that is of the bottom wall 111 of the base 11 and that faces the rotating member 13 may further have a second groove 1113 (as shown in FIG. 18). The second groove 1113 is configured to accommodate a lubrication structure. The lubrication structure may perform lubrication. For example, the lubrication structure may be lubricating grease, or the like. When the rotating member 13 rotates relative to the bottom wall 111 of the base 11, the rotating member 13 may be in contact with the lubrication structure in the second groove 1113. This helps improve smoothness of rotation of the rotating member 13 and alleviates problems of shaking and an abnormal sound between the rotating member 13 and the base 11.

There may be one second groove 1113 or a plurality of second grooves 1113. The plurality of second grooves 1113 may be evenly disposed along a rotation circumference of the rotating member. For example, a location of the second groove 1113 may correspond to a location of the main body portion 131 of the rotating member 13 in the thickness direction.

FIG. 17 is a diagram of a sectional structure of assembly of the base, the rotating member, and the cover plate in the elevating apparatus in FIG. 4.

For example, refer to FIG. 17. A side that is of the cover plate 12 and that faces the base 11 may have a limiting member 121 (refer to FIG. 5). One end of the limiting member 121 is fastened to the cover plate 12, and the other end of the limiting member 121 extends towards the rotating member 13. A space for the rotating member 13 to rotate may be formed between the other end of the limiting member 121 and the base 11. For example, there is a spacing between the other end of the limiting member 121 and the bottom wall of the base 11, and the rotating member 13 may be assembled in the spacing to rotate. The limiting member 121 limits the rotating member 13, and the limiting member 121 and the base 11 jointly limit the rotating member 13 to not move in the thickness direction, but rotate in the base 11.

There may be one limiting member 121. Alternatively, there may be a plurality of limiting members 121. The plurality of limiting members 121 may be disposed around an avoidance hole on the cover plate 12, and there may be a spacing between two adjacent limiting members 121.

The entire rotating member 13 may be located between the limiting member 121 and the base 11. Alternatively, only a part of the rotating member 13 is located between the limiting member 121 and the base 11. For example, there are a plurality of limiting members 121. The main body portion 131 of the rotating member 13 may be located in a rotation space defined between the limiting members 121 and the base 11, and the mounting portion 132 may be located in a spacing between two adjacent limiting members 121, so that the cover plate 12, the base 11, and the rotating member 13 have a large stacked region in the thickness direction, thereby improving integration and further reducing the thickness of the elevating apparatus while ensuring rotation limiting of the rotating member 13.

It may be understood that there is a spacing between an end face of one end that is of the limiting member 121 and that faces away from the cover plate 12 and the main body portion 131 of the rotating member 13, to ensure smoothness of rotation of the rotating member 13.

A surface that is of the main body portion 131 of the rotating member 13 and that faces the cover plate 12 (the limiting member 121) has a third groove 1317. The third groove 1317 is configured to accommodate a lubrication structure. The lubrication structure may perform lubrication, to help improve smoothness of rotation of the rotating member 13, and alleviate the problems of shaking and the abnormal sound between the rotating member 13 and the cover plate 12 (the limiting member 121).

There may alternatively be one third groove 1317, or a plurality of third grooves 1317. The plurality of third grooves 1317 may be evenly disposed in the circumferential direction of the rotating member 13. For example, the third groove 1317 and the limiting member 121 on the cover plate 12 may at least partially overlap in the thickness direction.

Still refer to FIG. 17. The cover plate 12 covers the base 11, and an accommodating cavity 12a may be enclosed between the cover plate 12 and the base 11. For example, the cover plate 12 covers a part of the accommodation cavity 11a in the base 11, to enclose the accommodating cavity 12a. At least the transmission mechanism 130 is located in the accommodating cavity 12a, and the transmission mechanism 130 is separately connected to the base 11 and the cover plate 12 to be stably disposed in the accommodating cavity 12a. For example, two ends of the rotating shaft 1302 of the transmission mechanism 130 are respectively fastened to the base 11 and the cover plate 12.

For example, the accommodating cavity 12a may be located on one side of the rotating member 13, for example, the accommodating cavity 12a may be located on an outer side of the rotating member 13 along a radial direction of a rotation circumference, so that the accommodating cavity 12a and the rotating member 13 have a stacked region in the thickness direction, to further reduce the thickness of the elevating apparatus.

It should be noted that the drive mechanism 120 may be located in the accommodating cavity 12a, or the drive mechanism 120 may be located outside the accommodating cavity 12a. Alternatively, in some examples, the drive mechanism 120 may be partially located in the accommodating cavity 12a and partially located outside the accommodating cavity 12a.

FIG. 18 is a diagram of a front view of a structure of assembly of the base and the drive mechanism in FIG. 17.

For example, as shown in FIG. 18, at least a part of the output shaft 1202 of the drive mechanism 120 may be located in the accommodating cavity 12a, so that the output shaft 1202 cooperates with the transmission mechanism 130, to drive the rotating member 13 to rotate.

It should be noted that for example, the transmission mechanism 130 is a gear component. When the output shaft 1202 rotates to drive the gear 1301 of the transmission mechanism 130 to rotate (refer to FIG. 17), the output shaft 1202 may move due to an engaging action of the gear 1301 and the first tooth structure on the output shaft 1202, as shown in FIG. 18, the output shaft 1202 moves away from or toward the drive portion 1201 in a direction of a rotation axis of the output shaft 1202, causing abnormal sound problems such as shift and impact between the output shaft 1202 and a structure in the drive portion 1201.

As shown in FIG. 18, a protruding stopper 1115 may be disposed on the base 11, the stopper 1115 is located in the accommodating cavity, and the stopper 1115 is located on a side that is of the output shaft 1202 and that faces away from the drive portion 1201 along the rotation axis. The stopper 1115 can limit the output shaft 1202, to limit movement of the output shaft 1202 along the axis, and alleviate problems such as the abnormal sound and noise of the drive mechanism 120.

For example, a distance between a surface that is of the stopper 1115 and that faces the output shaft 1202 and an end surface of one end that is the output shaft 1202 that faces away from the drive portion 1201 along the rotation axis may be 0.1 mm to 0.2 mm, that is, a spacing between the stopper 1115 and the output shaft 1202 may be 0.1 mm to 0.2 mm, to limit displacement of the output shaft 1202 under a condition that the stopper 1115 does not affect rotation of the output shaft 1202, so that the displacement generated by the output shaft 1202 does not impact the structure in the drive portion 1201 as much as possible, thereby avoiding generating problems such as the abnormal sound.

To guide and limit elevating of the elevating member 14, still refer to FIG. 18. A third slide rail 1121 may be further disposed on the side wall 112 of the base 11, and the elevating member 14 has a third slide block 142 (refer to FIG. 17). The third slide rail 1121 may extend in the thickness direction, and the third slide block 142 may be inserted into the third slide rail 1121 and slide along the third slide rail 1121. Guiding of the third slide rail 1121 can ensure that the elevating member 14 moves up and down in the thickness direction under driving of the rotating member 13.

Certainly, in some examples, the third slide block 142 may be disposed on the side wall 112 of the base 11, and the third slide rail 1121 may be disposed on the elevating member 14.

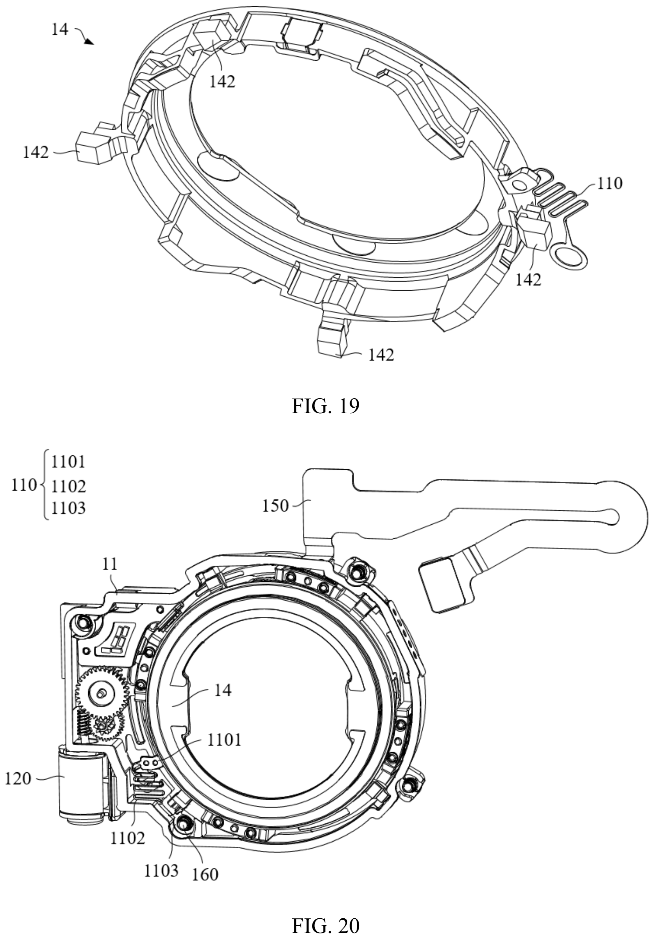

FIG. 19 is a diagram of a structure of the elevating member in FIG. 17.

There may be one third slide block 142 or a plurality of third slide blocks 142 in some examples. For example, refer to FIG. 19. There may be four third slide blocks 142. It may be understood that a quantity of third slide rails 1121 may correspond to a quantity of third slide blocks 142.

The plurality of third slide blocks 142 may be evenly distributed in the circumferential direction of the elevating member 14. The plurality of evenly distributed third slide blocks 142 can provide even support for the elevating member 14, and can alleviate problems such as pressing depression and pressing shaking when the top protection cover 15 of the camera module and the elevating apparatus are pressed.

A flexible conductive member 110 may further be disposed on the elevating member 14. The flexible conductive member 110 has a conductive property. For example, the flexible conductive member 110 may be a flexible metal conductive member, a flexible circuit board, or the like.

FIG. 20 is a diagram of a structure of another assembly of the base, the rotating member, and the elevating member in the elevating apparatus according to this embodiment of this application.

Refer to FIG. 20. The flexible conductive member 110 may include a first connection end 1101 and a second connection end 1103. The first connection end 1101 may be electrically connected to the elevating member 14, and the second connection end 1103 may be configured to connect to an external circuit board. For example, the elevating member 14 may be grounded via the flexible conductive member 110, to meet requirements such as electrostatic protection of the camera module.

For example, refer to FIG. 20. A conductive member 160 may be disposed on the base 11. The second connection end 1103 of the flexible conductive member 110 may be fastened to and electrically connected to the conductive member 160 on the base 11, and is electrically connected to a main circuit board 105 of the electronic device 100 via the conductive member 160 on the base 11.

The conductive member 160 may be a conductive structure disposed independently on the base 11.

Alternatively, in some examples, the base 11 and the cover plate 12 may be fastened and assembled via a metal fastener, and the conductive member 160 may be the metal fastener. For example, the metal fastener may be a screw, a pin, a clamping member, or the like.

Still refer to FIG. 20. The elevating apparatus 10 may further include a flexible circuit board 150. The flexible circuit board 150 may be electrically connected to the conductive member 160 on the base 11, to implement electrical connection between the flexible conductive member 110 and the flexible circuit board 150. The flexible circuit board 150 may be electrically connected to the main circuit board of the electronic device, to implement electrical connection between the elevating member 14 and the main circuit board of the electronic device.

In addition, the drive mechanism 120 may be electrically connected to the flexible circuit board 150, to control the drive mechanism 120.

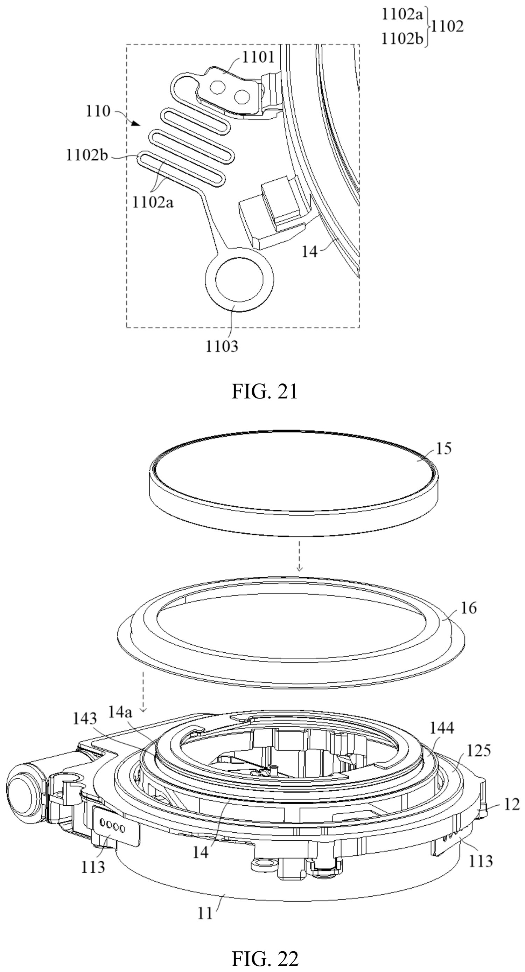

FIG. 21 is a diagram of a partial enlarged structure of the flexible conductive member in FIG. 20.

For example, refer to FIG. 21. The flexible conductive member 110 may further include an elastic extension and compression section 1102. The elastic extension and compression section 1102 is located between the first connection end 1101 and the second connection end 1103. The elastic extension and compression section 1102 has an adjustable extension and compression margin.

For example, the elastic extension and compression section 1102 may include a bent section 1102b and a plurality of cantilever sections 1102a. The plurality of cantilever sections 1102a are sequentially spaced apart, and the bent section 1102b and the cantilever sections 1102a are alternately distributed in sequence. For example, the elastic extension and compression section 1102 in FIG. 12 may include six bent sections 1102b and seven cantilever sections 1102a. The seven cantilever sections 1102a are spaced apart, the cantilever sections 1102a and the bent sections 1102b are sequentially alternately arranged, and one bent section 1102b is connected between two adjacent cantilever sections 1102a.

In this way, the formed elastic extension and compression section 1102 is similar to a spring structure. Under an external force, the elastic extension and compression section 1102 can be extended or compressed, thereby avoiding impact of disposing the flexible conductive member 110 on moving up and down of the elevating member 14. When the elevating member 14 moves up away from the rotating member 13 in the thickness direction, the elevating member 14 moves to drive the first connection end 1101 to move, so that the elastic extension and compression section 1102 can extend. On the contrary, when the elevating member 14 moves down toward the rotating member 13 in the thickness direction, the elevating member 14 moves to drive the first connection end 1101 to move, so that the elastic extension and compression section 1102 can compress.

The flexible conductive member 110 may be formed by bending a thin strip-shaped flexible circuit board, or the flexible conductive member 110 may be formed by bending a thin strip-shaped metal structure, for example, formed by bending a copper metal wire, or the like.

FIG. 22 is a diagram of a partial split structure of the elevating apparatus in FIG. 4.

Refer to FIG. 22. One end of the elevating member 14 cooperates with the rotating member 13 in the base 11, and the other end of the elevating member 14 may extend outside the base 11 through the avoidance hole on the cover plate 12.

To implement connection between the elevating member 14 and the side protection sleeve 16 and the top protection cover 15, for example, the other end of the elevating member 14 may have a first mounting platform 144, and the first mounting platform 144 may be disposed around the other end of the elevating member 14.

The cover plate 12 may have a second mounting platform 125, and the second mounting platform 125 may be disposed around the avoidance hole on the cover plate 12. One end of the side protection sleeve 16 may be fastened to the second mounting platform 125, and the other end of the side protection sleeve 16 may be fastened to the first mounting platform 144.

For example, the two ends of the side protection sleeve 16 may be respectively fastened to the first mounting platform 144 and the second mounting platform 125 through bonding. Certainly, in some other examples, the two ends of the side protection sleeve 16 may alternatively be fastened to the first mounting platform 144 and the second mounting platform 125 in another manner like clamping or thread fastening.

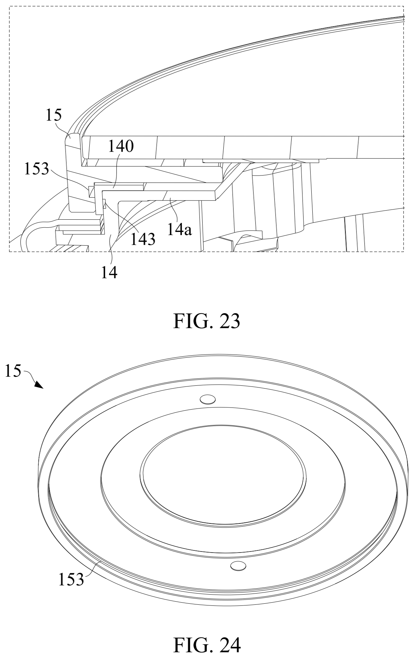

The other end of the elevating member 14 may be partially sleeved in the top protection cover 15. For example, an end portion 14a of the other end of the elevating member 14 may protrude from the first mounting platform 144, and an end portion 14a of the other end of the elevating member 14 may be sleeved in the top protection cover 15 (refer to FIG. 23).

It may be understood that the top protection cover 15, the cover plate 12, and the side protection sleeve 16 may enclose the accommodation cavity of the base 11 into a closed space (refer to FIG. 6). To meet a breathability requirement of the camera module, still refer to FIG. 22. A waterproof and breathable member 113 may be disposed on the base 11, and the accommodation cavity inside the base 11 may be in communication with the outside of the base 11 via the waterproof and breathable member 113. The waterproof and breathable member 113 may include a waterproof and breathable film, and can allow gas to pass through but cannot allow liquid to pass through, thereby meeting the breathability requirement of the camera module and ensuring waterproof performance of the camera module.

There may be one waterproof and breathable member 113 or a plurality of waterproof and breathable members 113. For example, two waterproof and breathable members 113 may be disposed on the side wall of the base 11.

For example, the other end of the elevating member 14 may be fastened to the top protection cover 15 in a bonding manner.

FIG. 23 is a diagram of partial enlargement of a part A in FIG. 7.

Refer to FIG. 23. There may be a bonding layer 140 between the outer wall of the end portion 14a of the other end of the elevating member 14 and the inner wall of the top protection cover 15, and the elevating member 14 is fastened to the top protection cover 15 via the bonding layer 140.

To further improve assembly strength of the elevating member 14 and the top protection cover 15, a fourth groove 143 may be disposed on the outer wall of the end portion 14a of the other end of the elevating member 14 (refer to FIG. 24).

FIG. 24 is a diagram of a structure of the top protection cover 15 in FIG. 22.

Refer to FIG. 24. A fifth groove 153 may be disposed on the inner wall of the top protection cover 15. As shown in FIG. 23, the bonding layer 140 may be filled in the fourth groove 143 and the fifth groove 153. On one hand, the fourth groove 143 and the fifth groove 153 increase bonding areas between the bonding layer 140 and the elevating member 14 and between the bonding layer 140 and the top protection cover 15, thereby improving bonding strength. On the other hand, the bonding layer 140 located in the fourth groove 143 and the fifth groove 153 forms an undercut structure, to further enhance bonding performance and prevent the top protection cover 15 from falling off in the scenarios such as falling.

In embodiments of this application, the cover plate 12 may be an integral plate-like structural member that is entirely covered on the base 11 (refer to FIG. 17), and a part of the accommodation cavity of the cover plate 12 and the base 11 form the accommodating cavity 12a for accommodating the transmission mechanism 130. The transmission mechanism 130 may be separately fastened to the cover plate 12 and the base 11. For example, the transmission mechanism 130 is the component. The two ends of the rotating shaft 1302 of the gear component may be fastened to the cover plate 12 and the base 11 respectively, so that the plurality of gears 1301 of the gear component are assembled in the accommodating cavity 12a.

For example, one end of the rotating shaft 1302 may be fastened to the base 11, the cover plate 12 may have an axial hole, the cover plate 12 covers the base 11, and the other end of the rotating shaft 1302 may be fastened to the axial hole.

It should be noted that the cover plate 12 and the base 11 need to be fastened in alignment. For example, the cover plate 12 and the base 11 are fastened via a screw and a matching nut. The plurality of first positioning holes 124 (as shown in FIG. 5) are disposed on the cover plate 12, and the plurality of second positioning holes 114 (as shown in FIG. 5) are disposed on the base 11. The cover plate 12 covers the base 11. The first positioning holes 124 and the second positioning holes 114 need to be aligned, so that the screw can pass through the second positioning holes 114 and the first positioning holes 124, and cooperate with the matching nut, to fasten the cover plate 12 and the base 11.

Due to assembly and production precision impact, after the first positioning holes 124 of the cover plate 12 and the second positioning holes 114 are aligned, the axial hole on the cover plate 12 and the rotating shaft 1302 on the base 11 may have an alignment deviation, and the rotating shaft 1302 may be skewed. This affects transmission effect of the transmission mechanism 130, even results transmission failure, and affects moving up and down of the elevating member 14.

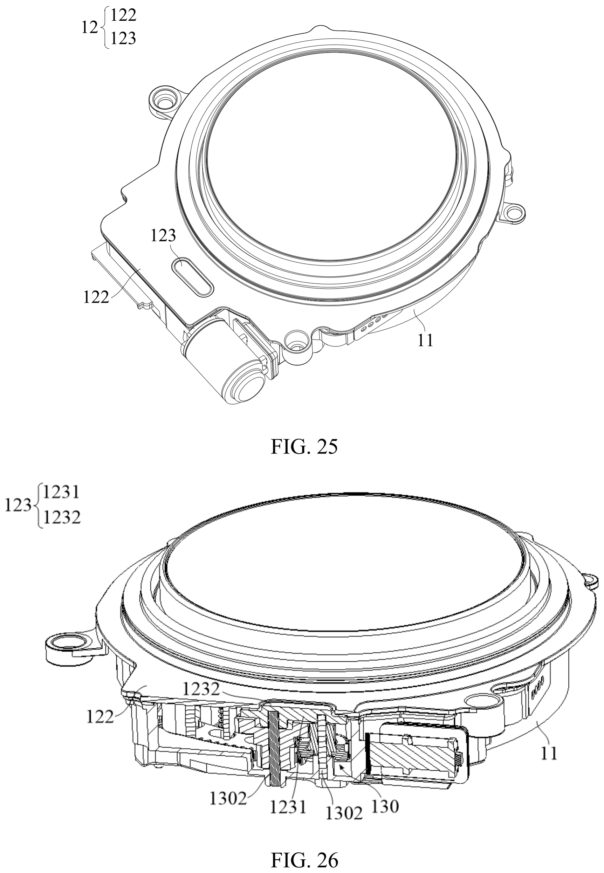

FIG. 25 is a diagram of a structure of another elevating apparatus according to an embodiment of this application.

In some embodiments, refer to FIG. 25. The cover plate 12 may include a first cover body 122 and a second cover body 123. To be specific, the cover plate 12 may include two independent cover bodies, and the second cover body 123 may be fastened and disposed on the first cover body 122.

FIG. 26 is a diagram of a sectional structure at the second cover body of the elevating apparatus in FIG. 25.

As shown in FIG. 26, the first cover body 122 is fastened to the base 11. For example, the first cover body 122 and the base 11 may be fastened and assembled together via the screw and the matching nut.

The second cover body 123 is fastened to the transmission mechanism 130. For example, the second cover body 123 is fastened to the rotating shaft 1302 of the transmission mechanism 130, so that the first cover body 122 and the second cover body 123 are two independent structural members assembled together. This decouples an alignment tolerance of assembly of the cover plate 12 and the base 11 and an alignment tolerance of assembly of the cover plate 12 and the transmission mechanism 130. An assembly spacing between the first cover body 122 and the second cover body 123, and the like can absorb a tolerance caused by alignment of assembly of the first cover body 122 and the base 11, ensure precise alignment of assembly of the second cover body 123 and the transmission mechanism 130, and avoid a problem that the rotating shaft is skewed in the assembly process due to excessive positioning holes and over-positioning, thereby ensuring transmission effect.

A surface that is of the second cover body 123 and that faces the base 11 may have an axial hole, and an end that is of the rotating shaft 1302 of the transmission mechanism and that faces away from the base 11 may be inserted into and fastened in the axial hole.

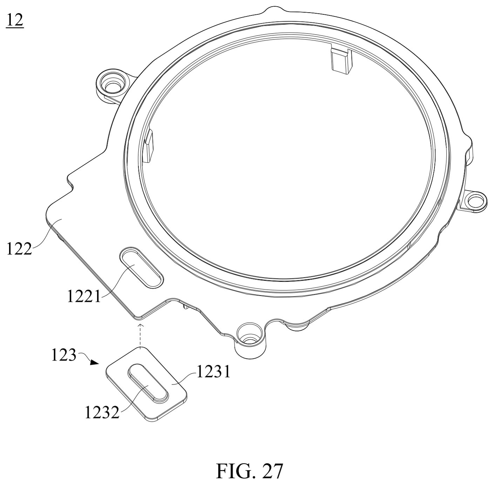

FIG. 27 is a diagram of a split structure of the cover plate in the elevating apparatus in FIG. 25.

To implement assembly of the first cover body 122 and the second cover body 123, for example, as shown in FIG. 27, a second through hole 1221 may be disposed on the first cover body 122, and the second cover body 123 is mounted in the second through hole 1221.

The second cover body 123 may include a fastening portion 1231 and a protrusion portion 1232, the protrusion portion 1232 is disposed on the fastening portion 1231, and the fastening portion 1231 is fastened to the transmission mechanism.

It should be noted that the fastening portion 1231 and the protrusion portion 1232 may be an integrated structural member, or the fastening portion 1231 and the protrusion portion 1232 may be separately formed. The fastening portion 1231 and the protrusion portion 1232 may be assembled together in a manner like bonding, welding, clamping, or fastener connection.

As shown in FIG. 26, the protrusion portion 1232 may be inserted and fastened in the second through hole 1221. A surface, the fastening portion 1231, on which the protrusion portion 1232 is disposed abuts against a surface that is of the first cover body 122 and that faces the base 11, and the fastening portion 1231 is fastened to the base 11. Insertion of the protrusion portion 1232 into the second through hole 1221 and abutting of the fastening portion 1231 against the first cover body 122 are for assembly positioning, to facilitate assembly. In addition, the first cover body 122 and the second cover body 123 have a larger contact area, and have higher reliability.

The first cover body 122 and the second cover body 123 may be fastened in a manner like bonding, welding, thread fastening, or clamping. For example, the first cover body 122 and the second cover body 123 are bonded. During actual assembly, the second cover body 123 may be first cooperated with the rotating shaft 1302 on the base 11, then a glue layer is coated on a peripheral outer wall of the protrusion portion 1232 and a surface that is of the fastening portion 1231 and that faces away from the base 11, then the first cover body 122 is covered on the base 11, and the protrusion portion 1232 is inserted into the second through hole 1221. An outer wall of the protrusion portion 1232 and an inner wall of the second through hole 1221 may be bonded together, so that the surface that is of the fastening portion 1231 and that faces away from the base 11 abuts against and is bonded together with a surface that is of the first cover body 122 and that faces the base 11. A bonding area is large, and high assembly strength is ensured. In addition, the assembly tolerance is more easily absorbed by squeezing the glue layer, thereby ensuring transmission effect.

In the descriptions of embodiments of this application, it should be noted that, unless otherwise clearly specified and limited, the term "mounting", "connection to", or "connection" should be understood in a broad sense, for example, may be fastening, or may be an indirect connection through an intermediate medium, or may be an internal communication between two elements or an interaction relationship between two elements. A person of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. An elevating apparatus, comprising:
an elevating member;
a rotating member, wherein the rotating member is rotatably disposed;
a linkage member, wherein one of the rotating member and the elevating member has a main body portion and a mounting portion that are integrally formed, the main body portion and the mounting portion enclose an accommodation space, the linkage member is at least partially disposed in the accommodation space, the linkage member cooperates with the other of the rotating member and the elevating member, and the rotating member is configured to drive, in a rotation process via the linkage member, the elevating member to move toward or away from the rotating member in a thickness direction;
an elastic member located in the accommodation space, wherein the elastic member is located between the linkage member and the main body portion; and
at least two guide members fastened in the accommodation space, wherein a first through hole is disposed on at least one of the mounting portion and the main body portion, the first through hole is configured to allow the guide member to pass through and be fastened to the guide member, the linkage member is located on the at least two guide members, and the at least two guide members are configured to enable the linkage member to slide in the thickness direction; and
the elastic member is located on at least one of the at least two guide members, and the guide member on which the elastic member is disposed is configured to enable the elastic member to elastically extend and compress in the thickness direction.

2. The elevating apparatus according to claim 1, wherein the at least two guide members comprise a first guide member and a second guide member;
the linkage member comprises a matching portion and a first extension portion that are connected, and the linkage member cooperates with the other of the rotating member and the elevating member via the matching portion; and
the matching portion is disposed around the first guide member, the first extension portion is disposed around the second guide member, and a thickness of the matching portion is greater than a thickness of the first extension portion.

3. The elevating apparatus according to claim 2, wherein the elastic member is disposed around the second guide member, and the elastic member is located between the first extension portion and the main body portion.

4. The elevating apparatus according to claim 3, wherein the at least two guide members further comprise a third guide member, and the third guide member and the second guide member are respectively located on two sides of the first guide member in a rotation direction of the rotating member; and
the linkage member further comprises a second extension portion, the second extension portion is disposed around the third guide member, the elastic member is further disposed around the third guide member, and the elastic member is located between the second extension portion and the main body portion.

5. The elevating apparatus according to claim 4, wherein a thickness of the second extension portion is less than the thickness of the matching portion.

6. The elevating apparatus according to claim 4, wherein a spacing between an inner surface of the matching portion and an outer surface of the first guide member ranges from 5 µm to 10 µm;
a spacing between an inner surface of the first extension portion and an outer surface of the second guide member ranges from 20 µm to 30 µm; and
a spacing between an inner surface of the second extension portion and an outer surface of the third guide member ranges from 20 µm to 30 µm.

7. The elevating apparatus according to any one of claims 2 to 6, wherein the mounting portion comprises a top wall, and the top wall is opposite to the main body portion; and
the top wall and the main body portion each have the first through hole, and two ends of the guide member are separately fastened in the first through hole.

8. The elevating apparatus according to claim 7, wherein a surface that is of the top wall and that faces away from the main body portion has a first groove, and the first through hole is located on a bottom wall of the first groove; and
the elevating apparatus further comprises a first connection member, the first connection member is located in the first groove, and the guide member is fastened in the first through hole via the first connection member.

9. The elevating apparatus according to claim 8, wherein the main body portion comprises a top surface and an outer side surface, the top surface is opposite to the top wall of the mounting portion, and the outer side surface may be located on an outer side of the top surface; and
the top surface has a first positioning slot, the outer side surface has an opening, the opening communicates with the first positioning slot, and the opening is configured to enable the elastic member to pass through and be disposed in the first positioning slot.

10. The elevating apparatus according to claim 9, wherein the top surface has a second positioning slot, and the first guide member is located in the second positioning slot.

11. The elevating apparatus according to any one of claims 2 to 10, wherein a protruding first slide block is disposed on the matching portion, and the other of the rotating member and the elevating member has a first slide rail; and
the first slide rail is at least partially disposed in an inclined manner relative to the thickness direction, and the first slide block is inserted into the first slide rail and slides along the first slide rail.

12. The elevating apparatus according to any one of claims 1 to 11, further comprising a flexible conductive member, wherein the flexible conductive member comprises a first connection end, an elastic extension and compression section, and a second connection end that are sequentially connected, the first connection end is electrically connected to the elevating member, and the second connection end is electrically connected to a base; and
the elastic extension and compression section comprises a bent section and a plurality of cantilever sections, the plurality of cantilever sections are spaced apart, the cantilever sections and the bent section are alternately distributed in sequence, and two adjacent cantilever sections are connected via one bent section.

13. The elevating apparatus according to any one of claims 1 to 12, further comprising a drive mechanism and a transmission mechanism, the transmission mechanism separately cooperates with the drive mechanism and the rotating member, and the drive mechanism drives, via the transmission mechanism, the rotating member to rotate;
the elevating apparatus further comprises the base and a cover plate, the rotating member is rotatably disposed in the base, the cover plate covers the base, and the cover plate has an avoidance hole for the elevating member to pass through; and
an accommodating cavity is enclosed between the cover plate and the base, at least the transmission mechanism is disposed in the accommodating cavity, and the transmission mechanism is separately connected to the cover plate and the base.

14. The elevating apparatus according to claim 13, wherein the cover plate comprises a first cover body and a second cover body, a second through hole is disposed on the first cover body, and the second cover body is assembled on the second through hole; and
the first cover body is fastened to the base, and the second cover body is fastened to the transmission mechanism.

15. The elevating apparatus according to claim 14, wherein the second cover body comprises a fastening portion and a protrusion portion, the protrusion portion is protruded from and disposed on one surface of the fastening portion, and the fastening portion is fastened to the transmission mechanism; and
the protrusion portion is inserted and fastened in the second through hole, and the fastening portion abuts against and is fastened to a surface that is of the first cover body and that faces the base.

16. The elevating apparatus according to claim 13, wherein the rotating member further comprises a transmission portion, the transmission portion is fastened to the main body portion, the transmission mechanism cooperates with the transmission portion, and the transmission mechanism drives, via the transmission portion, the rotating member to rotate; and
the base has a limiting slot, the transmission portion is located in the limiting slot, the limiting slot has cushions at two ends in the rotation direction of the rotating member, and the cushion at least partially protrudes in the limiting slot.

17. The elevating apparatus according to claim 16, wherein a plurality of weight reduction slots are disposed on the transmission portion.

18. The elevating apparatus according to claim 16 or 17, wherein a surface that is of the transmission portion and that faces the base has a second slide block, the base has an arc-shaped second slide rail, the second slide rail is located in the limiting slot, and the second slide block slides along the second slide rail; and
a surface that is of the base and that faces the rotating member has a second groove, and the second groove is configured to accommodate a lubrication structure.

19. The elevating apparatus according to any one of claims 13 to 18, wherein a surface that is of the cover plate and that faces the base has a protruding limiting member, and at least the main body portion of the rotating member is located between the limiting member and the base; and
a surface that is of the main body portion and that faces the cover plate has a third groove, and the third groove is configured to accommodate a lubrication structure.

20. The elevating apparatus according to any one of claims 13 to 19, wherein the drive mechanism has a drive portion and an output shaft, the output shaft cooperates with the transmission mechanism, the drive portion is configured to enable the output shaft to rotate, the output shaft rotates to drive, via the transmission mechanism, the rotating member to rotate, and at least a part of the output shaft is located in the accommodating cavity; and
the base has a protruding stopper, the stopper is located in the accommodating cavity, and the stopper is located on a side that is of the output shaft and that faces away from the drive portion along a rotation axis.

21. The elevating apparatus according to claim 20, wherein a distance between a surface that is of the stopper and that faces the output shaft and an end face of one end that is of the output shaft and that faces away from the drive portion along the rotation axis is 0.1 mm to 0.2 mm.

22. The elevating apparatus according to any one of claims 13 to 21, wherein the base comprises a bottom wall and a side wall, the side wall is enclosed around the bottom wall, and the cover plate is fastened to the side wall; and
the side wall has a third slide rail, the elevating member has a third slide block, the third slide rail extends in the thickness direction, and the third slide block slides along the third slide rail.

23. The elevating apparatus according to any one of claims 13 to 22, wherein a waterproof and breathable member is also disposed on the base, and the inside of the base is in communication with the outside of the base via the waterproof and breathable member.

24. The elevating apparatus according to any one of claims 1 to 23, further comprising a top protection cover, wherein the top protection cover covers an end that is of the elevating member and that faces away from the rotating member;
an end portion of the end that is of the elevating member and that faces away from the rotating member is sleeved in the top protection cover, and there is a bonding layer between an outer wall of the end portion of the end that is of the elevating member and that faces away from the rotating member and an inner wall of the top protection cover; and
a fourth groove is disposed on the outer wall of the end portion of the end that is of the elevating member and that faces away from the rotating member, a fifth groove is disposed on the inner wall of the top protection cover, and the bonding layer is filled in the fourth groove and the fifth groove.

25. A camera module, comprising a camera apparatus and the elevating apparatus according to any one of claims 1 to 24, wherein the camera apparatus is disposed in the elevating apparatus, and at least a part of the camera apparatus is movably disposed in a thickness direction.

26. An electronic device, comprising a housing and the camera module according to claim 25, wherein the camera module is at least partially located in the housing.
